(19) **Europäisches Patentamt / European Patent Office / Office européen des brevets**

(11) **EP 4 277 183 A1**

(12) # EUROPEAN PATENT APPLICATION
published in accordance with Art. 153(4) EPC

(43) Date of publication:
**15.11.2023 Bulletin 2023/46**

(21) Application number: **21902596.2**

(22) Date of filing: **07.12.2021**

(51) International Patent Classification (IPC):
***H04L 5/00*** *(2006.01)*

(52) Cooperative Patent Classification (CPC):
**H04L 5/00**

(86) International application number:
**PCT/CN2021/136067**

(87) International publication number:
**WO 2022/121891 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2020 CN 202011460557**

(71) Applicant: **Vivo Mobile Communication Co., Ltd. Dongguan, Guangdong 523863 (CN)**

(72) Inventors:
- YUAN, Pu
  **Dongguan, Guangdong 523863 (CN)**
- JIANG, Dajie
  **Dongguan, Guangdong 523863 (CN)**
- LIU, Hao
  **Dongguan, Guangdong 523863 (CN)**

(74) Representative: **Raffay & Fleck Patentanwälte Grosse Bleichen 8 20354 Hamburg (DE)**

(54) **PILOT TRANSMISSION METHOD AND APPARATUS, NETWORK SIDE DEVICE, AND STORAGE MEDIUM**

(57) Disclosed in the present application are a pilot transmission method and apparatus, a network side device, and a storage medium. The method is applied to the network side device. The method comprises: performing orthogonalization processing on a pilot-based sequence, and determining pilots corresponding to a plurality of antenna ports; and mapping the pilots corresponding to the plurality of antenna ports onto pilot resource blocks, and mapping a pilot corresponding to one antenna port onto one pilot resource block.

FIG. 12

**Description**

**CROSS-REFERENCE TO RELATED APPLICATIONS**

This application claims priority to Chinese Patent Application No. No. 202011460557.5, filed December 11, 2020 in China, which is incorporated herein by reference in its entirety.

**TECHNICAL FIELD**

This application pertains to the field of communications technologies, and specifically relates to a pilot transmission method and apparatus, a network side device, and a storage medium.

**BACKGROUND**

When channel estimation is performed in an orthogonal time frequency space (Orthogonal Time Frequency Space, OTFS) modulation system, a transmitter maps a pilot pulse to a delay-Doppler domain, and a receiver estimates a channel response of the delay-Doppler domain through delay-Doppler image analysis on a pilot, to obtain a channel response expression of a time-frequency domain, thereby facilitating signal analysis and processing in the prior art in which the time-frequency domain is utilized.

In the prior art, when a multi-antenna port performs pilot transmission, a pseudorandom noise (pseudorandom noise, PN) sequence is generally used as a pilot, and superposition is performed at a same resource location. When a quantity of superposition layers is relatively large, there is a risk of a relatively high probability of erroneous detection due to a relatively low signal noise ratio (SIGNAL NOISE RATIO, SNR). In addition, PN sequences are not completely orthogonal between different sequences. Consequently, if more sequences are to be detected, the probability of false detection or erroneous detection is higher.

**SUMMARY**

Embodiments of this application provide a pilot transmission method and apparatus, a network side device, and a storage medium, to resolve a problem in the prior art that a probability of false detection or erroneous detection is high.

According to a first aspect, a pilot transmission method is provided, applied to a network side device. The method includes:

performing orthogonal processing on a pilot base sequence, and determining pilots corresponding to a plurality of antenna ports; and
mapping the pilots corresponding to the plurality of antenna ports to a pilot resource block, where
a pilot corresponding to one antenna port is mapped to one pilot resource block.

According to a second aspect, a pilot transmission apparatus is provided, applied to a network side device. The apparatus includes:

a first determining module, configured to: perform orthogonal processing on a pilot base sequence, and determine pilots corresponding to a plurality of antenna ports; and
a first mapping module, configured to map the pilots corresponding to the plurality of antenna ports to a pilot resource block, where
a pilot corresponding to one antenna port is mapped to one pilot resource block.

According to a third aspect, a network side device is provided. The network side device includes a processor, a memory, and a program or an instruction that is stored in the memory and that can be run on the processor, where when the program or the instruction is executed by the processor, the steps of the method in the first aspect are implemented.

According to a fourth aspect, a readable storage medium is provided. The readable storage medium stores a program or an instruction, and the program or the instruction is executed by a processor to implement the steps of the method in the first aspect.

According to a fifth aspect, a chip is provided. The chip includes a processor and a communications interface, the communications interface is coupled to the processor, and the processor is configured to run a program or an instruction of a network side device to implement the steps of the method in the first aspect.

In the embodiments of this application, orthogonal processing is performed on pilots corresponding to a plurality of antenna ports and then the pilots are mapped to pilot resource blocks in a delay-Doppler domain for transmission, so that pilot overheads in a delay-Doppler domain are reduced in a multi-antenna port system, and a probability of pilot false detection and erroneous detection is reduced on the basis of ensuring performance reliability.

BRIEF DESCRIPTION OF DRAWINGS

FIG. 1 is a block diagram of a wireless communications system according to an embodiment of this application;
FIG. 2 is a schematic diagram of mutual conversion between a delay-Doppler domain and a time-frequency plane according to an embodiment of this application;
FIG. 3 is a schematic diagram of channel response relationships in different planes according to an embodiment of this application;
FIG. 4 is a schematic processing flowchart of a receive end and a transmit end of an OTFS multi-carrier system according to an embodiment of this application;
FIG. 5 is a schematic diagram of pilot mapping of a delay-Doppler domain according to an embodiment of this application;
FIG. 6 is a schematic diagram of pilot location detection on a receiver side according to an embodiment of this application;
FIG. 7 is a schematic mapping diagram of a multi-port reference signal in a delay-Doppler domain according to an embodiment of this application;
FIG. 8 is a schematic diagram of pilot resource multiplexing of a delay-Doppler domain according to an embodiment of this application;
FIG. 9 is a schematic diagram of detection of a pilot according to an embodiment of this application;
FIG. 10 is a schematic diagram of performance comparison between two pilot design schemes in different pilot overhead conditions according to an embodiment of this application;
FIG. 11 is a schematic diagram of QCL relationship definition according to an embodiment of this application;
FIG. 12 is a schematic flowchart of a pilot transmission method according to an embodiment of this application;
FIG. 13 is a schematic diagram of overlapping mapping of a pilot signal block to a pilot resource block according to an embodiment of this application;
FIG. 14 is a schematic diagram of a relationship between a pilot base sequence, and an orthogonal coverage code and a pilot according to an embodiment of this application;
FIG. 15 is a first schematic diagram of orthogonal processing according to an embodiment of this application;
FIG. 16 is a second schematic diagram of orthogonal processing according to an embodiment of this application;
FIG. 17 is a schematic diagram of a Walsh-Hadamard code generation manner according to an embodiment of this application;
FIG. 18 is a schematic flowchart of pilot insertion in a delay-Doppler domain according to an embodiment of this application;
FIG. 19 is a schematic structural diagram of a pilot transmission apparatus according to an embodiment of this application;
FIG. 20 is a schematic structural diagram of a communications device according to an embodiment of this application; and
FIG. 21 is a schematic structural diagram of hardware of a network side device according to an embodiment of this application.

DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects.

In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system.

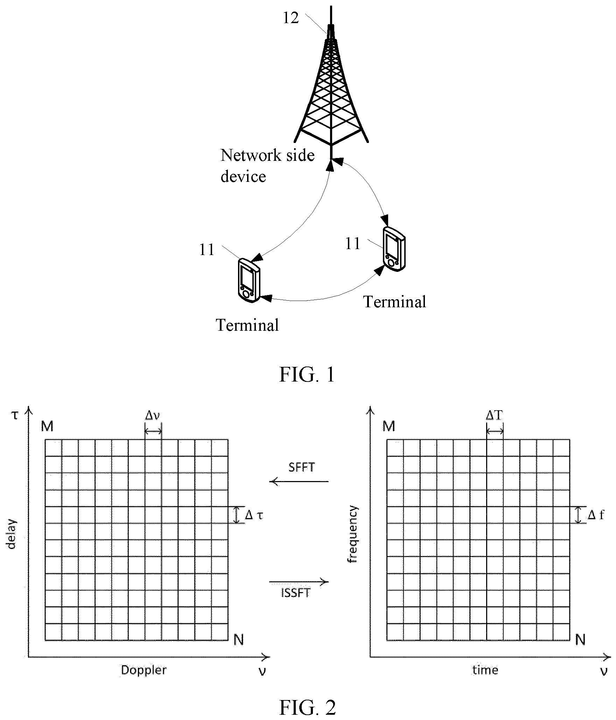

FIG. 1 is a block diagram of a wireless communications system according to an embodiment of this application. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

For ease of description, the following content is first introduced:

downlink control information (Downlink control information, DCI);
a physical downlink control channel (Physical downlink control channel, PDCCH);
a Physical downlink shared channel (Physical downlink shared channel, PDSCH);
radio resource control (Radio resource control, RRC);
a physical broadcast channel (Physical Broadcast Channel, PBCH);
a master information block (Master information block, MIB);
a system information block (System information block, SIB);
a resource element (Resource element, RE); and
code division multiplexing (Code Division Multiplexing, CDM).

In a complex electromagnetic wave transmission environment in a city, because a large amount of scattering, reflection, and refraction planes exist, radio signals arrive at a receive antenna at different moments on different paths, that is, a multipath effect of transmission. When symbols before and after a transmit signal arrive simultaneously on different paths, or when a next symbol arrives within delay extension of a previous symbol, inter symbol interference (inter symbol interference, ISI) is generated. Similarly, in a frequency domain, because of a Doppler effect caused by a relative velocity between a receive end and a transmit end, subcarriers on which signals are located produce varying degrees of shifts in frequency , which causes overlapping of possibly orthogonal subcarriers, that is, inter carrier interference (inter carrier interference, ICI) is produced. In an adopted orthogonal frequency division multiplexing (Orthogonal Frequency Division Multiplexing, OFDM) multi-carrier system in a communications system, anti-ISI performance is better by adding a cyclic prefix (cyclic prefix, CP). However, a weakness of OFDM is that a size of a carrier spacing is limited. Therefore, in a high-speed moving scenario (for example, a high-speed railway), a relatively large Doppler frequency shift caused by a relatively large relative velocity between the receive end and the transmit end destroys orthogonality between OFDM subcarriers, and consequently serious ICI is produced between subcarriers.

An orthogonal time frequency space OTFS technology is proposed to resolve the foregoing problem in the OFDM system. The OTFS technology defines a transformation between a delay-Doppler domain and a time-frequency domain. In the embodiments of this application, the delay-Doppler domain may also be referred to as a delay-Doppler plane, and the time-frequency domain may also be referred to as a time-frequency plane. Meanwhile, service data and a pilot are mapped to the delay-Doppler domain at the receive and the transmit end, delay and Doppler characteristics of a channel are captured by using the pilot in the delay-Doppler domain, and a pilot pollution problem caused by ICI in the OFDM system is avoided by using a guard interval. Therefore, channel estimation is more accurate, and a success rate of data decoding is improved at the receive end.

In the OTFS technology, a guard interval is required around a pilot symbol located in the delay-Doppler domain, and a size of the guard interval is related to a channel characteristic. In this application, a pilot symbol guard interval is dynamically adjusted according to the channel characteristic through channel measurement, so that it can be ensured that pilot overheads are approximately minimized on the premise of satisfying the system design, and a resource waste problem in a worst case in a conventional solution can be avoided.

The delay and Doppler characteristics of the channel are essentially determined by a multipath channel. Because of a difference in propagation distances, arrival times of signals to the receive end on different paths are different. For example, if two echoes $s_1$ and $s_2$ respectively arrive at the receive end through distances $d_1$ and $d_2$, a time difference between the two for arrival at the receive end is:

$$\Delta t = \frac{|d_1 - d_2|}{c},$$

where
c is a speed of light.

Due to the time difference between the two echoes $s_1$ and $s_1$, coherent superposition at the receive end side results in an observed signal amplitude jitter, namely, a fading effect. Similarly, Doppler diffusion of the multipath channel is also caused by the multipath effect.

The Doppler effect is due to the relative velocity between the receive end and the transmit end. Incident angles of signals arriving at the receive end and the transmit end through different paths are different relative to an antenna normal, which results in the difference in the relative velocity and different Doppler shifts of signals on different paths. It is assumed that an original frequency of a signal is $f_0$, the relative velocity between the receive end and the transmit end is $\Delta v$, and an included angle between normal incidence of a signal and an antenna at the receive end is $\theta$. In this case,

$$\Delta f = \frac{\Delta v}{f} \cos \theta.$$

Obviously, when the two echoes $s_1$ and $s_1$ arrive at the antenna at the receive end through different paths and have different incident angles $\theta_1$ and $\theta_2$, different Doppler shifts $\Delta f_1$ and $\Delta f_2$ are obtained.

In view of the above, the signal received by the receive end is a superposition of component signals with different delays and Doppler from different paths, and the whole reflects as the received signal with fading and a frequency shift relative to the original signals. Delay-Doppler analysis is performed on the channel, delay-Doppler information of each path is collected, thereby reflecting a delay Doppler-response of the channel.

A full name of an OTFS modulation technology is orthogonal time frequency space modulation. In this technology, information in a data packet of $M \times N$, for example, a quadrature amplitude modulation (Quadrature Amplitude Modulation, QAM) symbol, is logically mapped to a lattice of $M \times N$ in a two-dimensional delay-Doppler domain, that is, one QAM symbol in the packet is modulated by using a pulse in each lattice.

FIG. 2 is a schematic diagram of mutual conversion between a delay-Doppler domain and a time-frequency plane according to an embodiment of this application. As shown in FIG. 2, by designing a set of orthogonal two-dimensional base functions, a data set in a delay-Doppler domain plane of $M \times N$ is transformed into a time-frequency domain plane of $N \times M$, and this transformation is mathematically referred to as inverse symplectic Fourier transform (Inverse Symplectic Fourier Transform, ISFFT). Correspondingly, a transformation from the time-frequency domain to the delay-Doppler domain is referred to as symplectic Fourier transform (Symplectic Fourier Transform). A physical meaning behind it is that the delay and Doppler effect of a signal is actually a linear superposition effect of a series of solid waves with different time and frequency shifts after the signal passes through a multipath channel. In this sense, delay Doppler analysis and time-frequency domain analysis may be obtained by transforming ISSFT and SSFT.

Therefore, the OTFS technology transforms the time-varying multipath channel into a time-invariant two-dimensional delay-Doppler domain channel (within specific duration), which directly reflects a channel delay-Doppler response characteristic in a radio link caused by a geometric characteristic of a relative location of a reflector between transceivers. In this way, OTFS eliminates a difficulty of tracking a time-varying fading characteristic through traditional time-frequency domain analysis, and extracts all diversity characteristics of a time-frequency domain channel through delay-Doppler domain analysis. In an actual system, because a quantity of delays and Doppler frequency shifts of a channel is far less than a quantity of time domain and frequency domain responses of the channel, a channel impulse response matrix represented by the delay-Doppler domain is sparse. By analyzing the sparse channel matrix in the delay-Doppler domain by using the OTFS technology, a reference signal can be encapsulated more tightly and flexibly, which is especially conducive to supporting a large antenna array in a massive MIMO system.

A core of OTFS modulation is that a QAM symbol defined in the delay-Doppler domain is transformed for sending in the time-frequency domain, and then the receive end returns to the delay-Doppler domain processing, and therefore a radio channel response analysis method in the delay-Doppler domain may be introduced.

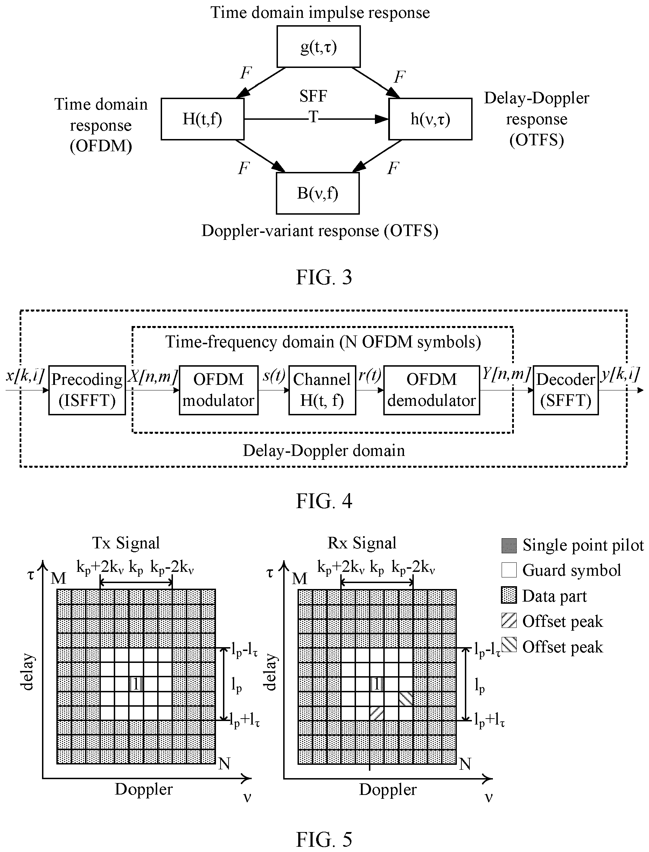

FIG. 3 is a schematic diagram of channel response relationships in different planes according to an embodiment of this application. As shown in FIG. 3, when a signal passes through a linear time-varying radio channel, channel response relationships of the signal in different planes are expressed.

In FIG. 3, an SFFT transformation formula is:

$$h(\tau,v) = \iint H(t,f) e^{-j2\pi(vt-f\tau)} d\tau dv \qquad (1)$$

Correspondingly, an ISSFT transformation formula is:

$$H(t,f) = \iint h(\tau,v) e^{j2\pi(vt-f\tau)} d\tau dv \qquad (2)$$

When the signal passes through the linear time-varying channel, a received signal in time domain is $r(t)$, a corresponding received signal in frequency domain is $R(f)$, and $r(t) = F^{-1}\{R(f)\}$. $r(t)$ may be expressed in the following form:

$$r(t) = s(t) * h(t) = \int g(t,\tau) s(t-\tau) d\tau \qquad (3)$$

It can be learned from the relationship in FIG. 3 that

$$g(t,\tau) = \int h(v,\tau) e^{j2\pi vt} dv \qquad (4)$$

(4) is substituted into (3) to obtain:

$$r(t) = \iint h(v,\tau) s(t-\tau) e^{j2\pi vt} d\tau dv \qquad (5)$$

It can be learned from the relationship shown in FIG. 3, a classical Fourier transform theory, and the formula (5) that:

$$\begin{aligned}
r(t) &= \iint h(v,\tau) \left( \int S(f) e^{j2\pi f(t-\tau)} df \right) e^{j2\pi vt} d\tau dv \\
&= \int \left( \iint h(v,\tau) e^{j2\pi(vt-f\tau)} d\tau dv \right) S(f) e^{j2\pi ft} df \\
&= \int H(t,f) S(f) e^{j2\pi ft} df \\
&= F^{-1}\{R(f)\}
\end{aligned} \qquad (6)$$

Equation (6) implies that the delay-Doppler domain analysis in the OTFS system may be implemented by adding extra signal processing at the transmit end and the receive end based on an existing communications framework established in the time-frequency domain. In addition, the extra signal processing includes only Fourier transform, and may be completely implemented by using existing hardware without new module. This good compatibility with an existing hardware system greatly facilitates application of the OTFS system. In an actual system, the OTFS technology may be conveniently implemented as a pre-processing module and a post-processing module of a filtering OFDM system. Therefore, the OTFS technology is compatible with the existing multi-carrier system.

When the OTFS is combined with the multi-carrier system, an implementation of the transmit end is as follows: A QAM symbol that includes to-be-sent information is carried by a waveform of the delay-Doppler domain, is transformed into a waveform of a time-frequency domain plane in a conventional multi-carrier system through two-dimensional inverse symplectic finite Fourier transform (Inverse Symplectic Finite Fourier Transform, ISFFT), and then is transformed into a time-domain sampling point through symbol-level one-dimensional inverse fast Fourier transform (Inverse Fast Fourier Transform, IFFT) and series parallel transformation and is sent.

The receive end in the OTFS system is approximately an inverse process of the transmit end. After the time-domain sampling point is received by the receive end, the time-domain sampling point is first transformed into a waveform in the time-frequency domain plane through parallel series transformation and symbol-level one-dimensional inverse fast Fourier transform (Fast Fourier Transform, FFT), and then is transformed into a waveform in the delay-Doppler domain plane through two-dimensional symplectic finite Fourier transform (Symplectic Finite Fourier Transform, SFFT), and a QAM symbol carried in the waveform in the delay-Doppler domain is processed at the receive end, including but not limited to channel estimation and equalization, demodulation and decoding, and the like.

FIG. 4 is a schematic processing flowchart of a transceiver end of an OTFS multi-carrier system according to an embodiment of this application.

The advantages of OTFS modulation are as follows:

(1) OTFS modulation transforms the time-varying fading channel in the time-frequency domain between the transceivers into a deterministic no-fading channel in the delay-Doppler domain. In the delay-Doppler domain, symbols in a set of information symbols sent at a time experience a same static channel response and an SNR.
(2) In the OTFS system, a reflector in a physical channel is parsed by using a delay-Doppler image, and coherent combination is performed on energy from different reflection paths by using a receive equalizer, which actually provides a static channel response without fading. By using the foregoing static channel characteristic, the OTFS system does not need to introduce a closed-loop channel adaptation like the OFDM system to cope with a fast-changing channel, thereby improving system robustness and reducing system design complexity.
(3) Since a quantity of delay-Doppler states in the delay-Doppler domain is far less than a quantity of time-frequency states in the time-frequency domain, channels in the OTFS system may be expressed in a very compact form. Channel estimation in the OTFS system has less overheads and is more accurate.
(4) Another advantage of OTFS is that on an extreme Doppler channel, a Doppler characteristic of the channel is presented completely by analyzing the delay-Doppler image by using an appropriate signal processing parameter, thereby facilitating signal analysis and processing in Doppler sensitive scenarios (such as high-speed moving and millimeter wave).

Based on the foregoing analysis, channel estimation in the OTFS system may use a new method. The transmitter maps a pilot pulse to the delay-Doppler domain. The receive end estimates a channel response $h(\nu, \tau)$ in the delay-Doppler domain by using through delay Doppler image analysis on the pilot, and further may obtain a channel response expression in the time-frequency domain according to the relationship shown in FIG. 3, thereby facilitating signal analysis and processing by using the prior art in the time-frequency domain.

FIG. 5 is a schematic diagram of pilot mapping of a delay-Doppler domain according to an embodiment of this application. As shown in FIG. 5, pilot mapping in the delay-Doppler domain may be adopted. In FIG. 5, a transmitted signal consists of a single-point pilot (a small square labeled 1) in $(l_p, k_p)$, a surrounding guard symbol whose area is $(2l_\tau+1)(4k_v+1)-1$ (an unshaded part), and a data part of $MN-(2l_\tau+1)(4k_v+1)$ (a region other than the guard symbol). At the receive end, there are two shift peaks (a slash shaded part) in a guard band of a lattice in the delay-Doppler domain, which means that the channel has two secondary paths with different delay Doppler except a primary path. Amplitudes, delays, and Doppler parameters of all the secondary paths are measured to obtain a delay-Doppler domain expression of the channel, that is, $h(\nu,\tau)$.

In particular, to prevent data on a lattice of a received signal from contaminating a pilot symbol and avoid inaccurate channel estimation, an area of a guard symbol should satisfy the following condition:

$$l_\tau \geq \tau_{max} M \Delta f \text{ and } k_v \geq v_{max} N \Delta T,$$

where

$\tau_{max}$ and $v_{max}$ respectively are a maximum delay and a maximum Doppler shift on all paths of the channel.

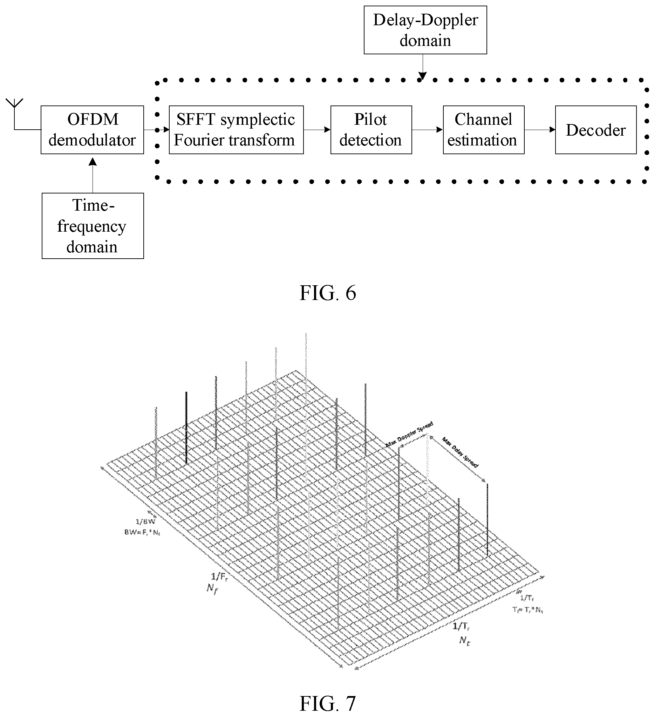

FIG. 6 is a schematic diagram of pilot location detection on a receive side according to an embodiment of this application. As shown in FIG. 6, a main procedure of the pilot location detection is as follows: OFDN demodulator -> SFFT symplectic Fourier transform -> pilot detection -> channel estimation -> decoder. The receive end transforms a received time domain sampling point into a QAM symbol in the delay-Doppler domain through the OFDM demodulator and OTFS transformation (SFFT in the figure), and then a location of a pilot pulse is determined through threshold-based signal power detection. It should be noted that, because power boost is generally required for pilot transmission, a power of a pilot pulse on the receive side is far greater than a data power, and because the pilot pulse and the data symbol experience identical fading, a pilot location is easily determined through power detection.

The method provided in FIG. 5 corresponds to a single-port scenario, that is, only one group of reference signals needs to be sent. In a modern multi-antenna system, a plurality of antenna ports are often used to simultaneously send multi-stream data, so that spatial freedom of an antenna is fully utilized, and a spatial diversity gain is obtained or a system throughput is improved. FIG. 7 is a schematic mapping diagram of a multi-port reference signal in a delay-Doppler domain according to an embodiment of this application. When there are a plurality of antenna ports, a plurality of pilots need to be mapped to in the delay-Doppler domain. Therefore, a pilot mapping manner shown in FIG. 7 is generated.

In FIG. 7, 24 antenna ports correspond to 24 pilot signals. Each pilot signal is in a form shown in FIG. 5, that is, a mode in which a center-point impulse signal is added with guard symbols on two sides. A quantity of delay-Doppler domain REs (resource elements) occupied by a single pilot is $(2l_{\tau}+1)(4k_v+1)$. If there are P antenna ports, considering that a guard band of an adjacent antenna port may be multiplexed, it is assumed that for pilot placement, a delay dimension is $P_1$, a Doppler dimension is $P_2$, and $P = P_1 P_2$. In this case, total resource overheads of the pilot is $[P_1(l_{\tau}+1)+l_{\tau}][P_2(2k_v+1)+2k_v]$.

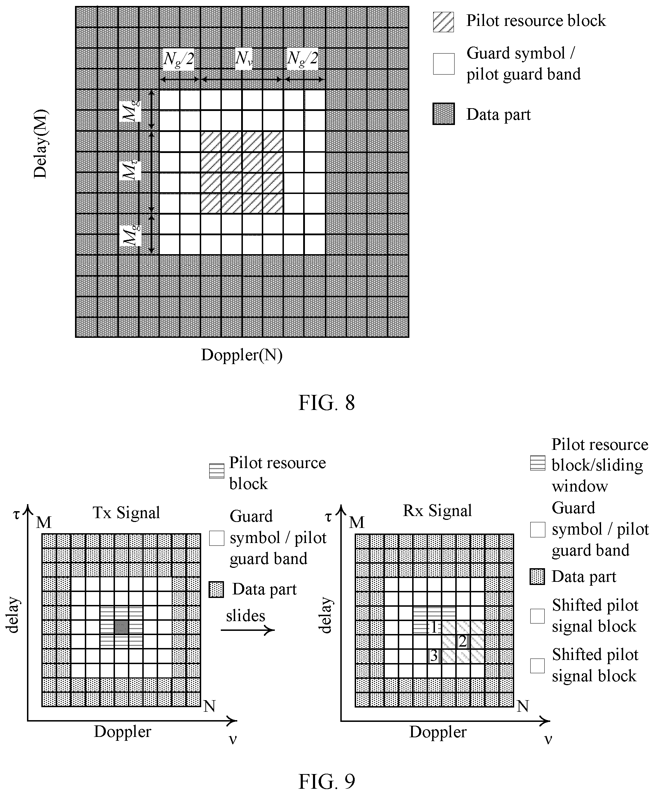

FIG. 8 is a schematic diagram of pilot resource multiplexing of a delay-Doppler domain according to an embodiment of this application. It can be learned that, single-port transmission has the advantages of less resource consumption and simple detection algorithm. However, for a communications system with a plurality of antenna ports, because a scheme of a single-point pilot and a guard band cannot perform resource multiplexing, a linear increase of overheads is caused. Therefore, for a multi-antenna system, a pilot mapping scheme in FIG. 8 is proposed.

In FIG. 8, a pilot is not in a form of a single-point pulse, but a pilot sequence constructed based on a PN sequence generated in a specific manner is mapped to a two-dimensional resource grid in the delay-Doppler domain according to a specific rule, that is, a slash shaded part in the figure. In this application, a resource location occupied by a pilot sequence may be used, that is, a slash shaded part, is referred to as a pilot resource block. An unshaded region next to the pilot resource block is a pilot guard band, consisting of blank resource elements that do not used to send any signal/data. Similar to the foregoing single-point pilot, a guard band is also provided around the single-point pilot to avoid mutual interference with data. A method for calculating a width of the guard band is the same as that in the single-point pilot mapping mode in FIG. 5. A difference lies in that, in a resource part to which a pilot sequence is mapped, pilot signals of different ports may be generated by selecting a low-correlation sequence, mapping is superposed on a same resource, and pilot sequence detection is performed at the receive end by using a specific algorithm, to distinguish pilots corresponding to different antenna ports. Because complete resource multiplexing is performed at the transmit end, pilot overheads in the multi-antenna port system can be greatly reduced.

FIG. 9 is a schematic diagram of detection of a pilot sequence according to an embodiment of this application. As shown in FIG. 9, a sequence pilot-based detection manner is presented. Similar to the foregoing scenario in FIG. 5, at the receive end, because of different delays and Doppler frequency shifts on two paths of a channel, a received pilot signal block is entirely shifted in the delay-Doppler domain to a slash shaded part in the figure (that is, a square labeled 2 and eight square blocks adjacent to the square block, and a square labeled 3 and eight square blocks adjacent to the square block). In this case, a sliding window detection operation is performed in the delay-Doppler domain by using a known sent pilot at the receive end (a horizontal-line shaded part in the figure, that is, a square labeled 1 and eight square blocks adjacent to the square block). When a sliding window detection operation result $M(R,S)[\delta,\omega]$ is $N_P \to +\infty$, it has the following properties (a probability of the following formula is close to 1):

$$M\left(R,S\right)[\delta,\omega] = 1 + \varepsilon'_{N_P}, \ \ if(\delta,\omega) = (\delta_0,\omega_0)$$
$$= \varepsilon_{N_P}, \ \ \ \ if(\delta,\omega) \neq (\delta_0,\omega_0) ,$$

where

$$|\varepsilon'_{N_P}| \leq \frac{1}{\sqrt{N_P}}, \ \ |\varepsilon_{N_P}| \leq \frac{C+1}{\sqrt{N_P}},$$

and $C > 0$ is a constant.

In the formula, $(\delta, \omega)$ and $(\delta_0, \omega_0)$ are respectively a current location (center point) of the sliding window and a shifted location (center point) of a pilot signal block in the received signal. It can be learned from the formula that only when $(\delta, \omega) = (\delta_0, \omega_0)$, a value near 1 can be obtained; otherwise, a result of sliding window detection operation is a smaller value. Therefore, when the sliding window (a horizontal-line shaded part in the figure, that is, a square labeled 1 and eight blocks adjacent to the square) coincides with shifted pilot signal blocks (a slash shaded part in the figure, that is, a square labeled 2 and eight blocks adjacent to the block, and a square labeled 3 and eight blocks adjacent to the block), an energy peak is obtained through detection opportunity computing, which is presented at a location of the delay Doppler field, and is presented at a location of the delay-Doppler domain, that is, a location of small squares labeled 2 and 3 in the figure. In this method, as long as $N_P$ has a sufficient length, the receive end may obtain a correct pilot location according to a value of $M(R, S)$, that is, a delay and Doppler information of the channel are obtained. In addition, an amplitude value of the channel is given by $1+\varepsilon'_{NP}$ obtained through the detection operation.

The scheme in FIG. 8 (a pilot sequence for short) has advantages and disadvantages compared with the scheme in FIG. 7 (a pilot pulse for short). The advantages of the pilot sequence scheme are as follows:

(1) Multi-port/multi-user multiplexing is facilitated.
(2) Accuracy of sequence detection can be adjusted flexibly.
(3) Guard symbol overheads are saved.
(4) Even if overheads are insufficient (that is, a reserved width of a pilot guard band is less than a width calculated according to a maximum channel delay and a maximum Doppler to avoid mutual interference between data at the receive end and the pilot), channel estimation accuracy can be maintained to ensure that a system performance loss is within an acceptable range.

The disadvantages are as follows:

(1) Complexity of sequence correlation/matching detection is relatively high.
(2) Accuracy is restricted by a sequence length. When the sequence length is relatively long, overheads of a pilot and a pilot guard band are relatively high.

The advantages of the pilot pulse scheme are as follows:

(1) The receive end only needs to perform power detection, and an algorithm is relatively simple.
(2) A detection success rate may be improved through power boost (power boost, that is, a transmit power of a pilot signal is separately increased by a transmitter).

The disadvantages are as follows:

(1) Each pilot pulse needs to be configured with a separate guard band, and therefore overheads are large during multi-port transmission.

The above advantages and disadvantages can summarize performance of the two schemes in different scenarios.

In addition, in some scenarios, overheads of the pilot guard interval are limited, and are not enough to fully cover the possible delay and Doppler shift of the channel. In this case, the pilot sequence scheme still has acceptable performance, but the pilot pulse scheme has a great loss of performance.

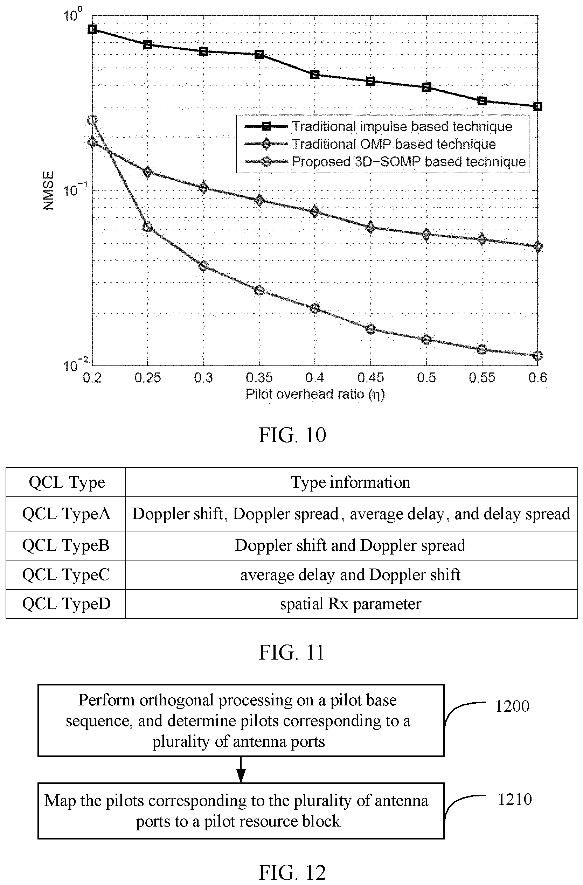

FIG. 10 is a schematic diagram of performance comparison between two pilot design schemes in different pilot overhead conditions according to an embodiment of this application. As shown in FIG. 10, a folding line of a diamond lattice and a folding line of a circular lattice in the figure are performance curves of pilot sequence schemes based on different detection algorithms, and a folding line of a square lattice is a performance curve of a pilot pulse scheme. It can be learned that in a special scenario shown (a delay and a Doppler shift of a channel are relatively large), even if pilot overheads reach 60%, performance of the pilot pulse scheme is still much lower than that of the pilot sequence scheme.

In addition, a Quasi co-location (Quasi co-location, QCL) relationship may be defined in the communications system to describe channel similarities between different reference signals, between a reference signal and an antenna port, and between antenna ports. FIG. 11 is a schematic diagram of QCL relationship definition according to an embodiment of this application. As shown in FIG. 11, depending on different statistical measures of channel similarity, the communications system can support, but is not limited to, several QCL relationships shown in FIG. 11.

In FIG. 11, QCL information is indicated by a base station to UE, so that when processing a currently received signal/data, the UE can obtain some prior information, so that specific processing is performed to improve performance of the receive end. For example, when the base station indicates a QCL-TypeC relationship between a synchronization signal broadcast channel blocks (Synchronization Signal and PBCH Block, SSB) and a tracking reference signal (tracking reference signal, TRS) antenna port, the receive end may correctly find, according to a timing relationship determined by the SSB and a frequency shift estimated by the SSB (reflected on a Doppler shift), a time domain sampling point in which the TRS is located, and perform frequency shift compensation processing, to more accurately perform channel estimation by using the TRS. For another example, when the base station indicates a QCL-TypeD relationship between a TRS and a DMRS port, a receive antenna port may receive a DMRS by using a same spatial receive parameter (that is, a receive beam) as previously received, thereby reducing beam scanning overheads in a DMRS phase.

The pilot design scheme of a base subsequence presents significant advantages for multi-antenna ports, but still has the following disadvantages.

(1) In the prior art, PN sequences are simply superposed at a same resource location. When a quantity of superposed layers is relatively large, there is a risk that a probability of erroneous detection is relatively high due to a relatively low SNR of a received signal.

(2) PN sequences used in the prior art are not completely orthogonal between different sequences. Consequently, if more sequences are to be detected, the probability of false detection/erroneous detection is higher. Therefore, there is also room for improvement in the sequence design.

(3) The sequence-based pilot design is more complex than the pilot pulse scheme. A new design requirement is put forward for an uplink-downlink indication message, a feedback message, and an interaction procedure. However, the prior art lacks design and description in this aspect. In view of the above, the prior art further has a relatively large improvement space. This application provides a pilot transmission method and apparatus, to improve the foregoing defects.

With reference to the accompanying drawings, the pilot transmission method provided in the embodiments of this application is described in detail by using specific embodiments and application scenarios.

FIG. 12 is a schematic flowchart of a pilot transmission method according to an embodiment of this application. As shown in FIG. 12, the method is applied to a network side device, and the method includes the following steps:

Step 1200: Perform orthogonal processing on a pilot base sequence, and determine pilots corresponding to a plurality of antenna ports.

Step 1210: Map the pilots corresponding to the plurality of antenna ports to a pilot resource block.

A pilot corresponding to one antenna port is mapped to one pilot resource block.

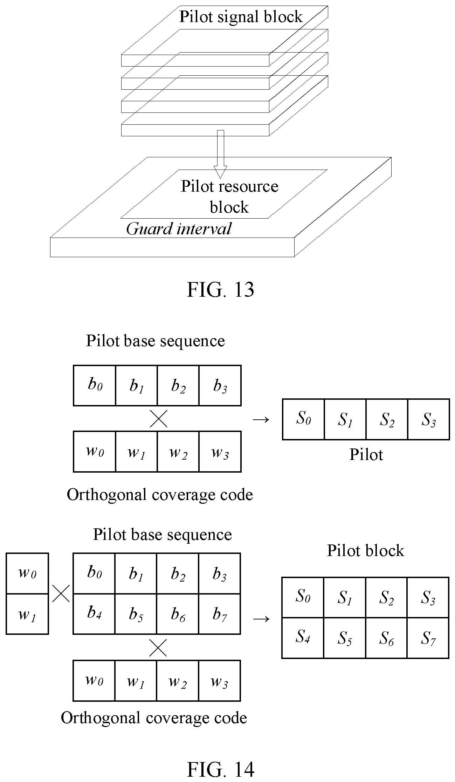

Specifically, FIG. 13 is a schematic diagram of overlapping mapping of a pilot signal block to a pilot resource block according to an embodiment of this application. As shown in FIG. 13, pilot sequences corresponding to the plurality of antenna ports may be mapped to one or more pilot resource blocks. Therefore, one or more pilot resource blocks may be determined in a delay-Doppler domain, and then the pilots corresponding to the plurality of antenna ports are mapped to the pilot resource block for transmission.

To reduce a probability of pilot false detection and erroneous detection, orthogonal processing may be first performed on the pilot base sequence, and the pilots corresponding to the plurality of antenna ports are determined, and then mapped to the corresponding pilot resource block. Specifically, FIG. 14 is a schematic diagram of a relationship between a pilot base sequence, and an orthogonal coverage code and a pilot according to an embodiment of this application. As shown in FIG. 14, orthogonal processing is performed on the pilot base sequence by using an orthogonal coverage code, to obtain a pilot.

It can be understood that pilots corresponding to one antenna port are mapped to only one pilot resource block for transmission, and pilots corresponding to one or more different antenna ports may be mapped to one pilot resource block.

Specifically, in comparison with the prior art in which only a simple PN sequence is used for a pilot, in this embodiment of this application, additional processing such as orthogonal processing is performed on the base sequence, thereby improving anti-interference performance. In addition, the pilots corresponding to the plurality of antenna ports are mapped to one or more pilot resource blocks according to a specific rule, thereby further improving detection performance.

Optionally, when a plurality of pilots are mapped to a plurality of pilot resource blocks, a mapping manner may be determined according to a specific rule, and maybe flexibly adjusted according to a channel state change.

Optionally, when a pilot is generated, the pilot may selectively carry some information (for example, time information or UE ID information), to reduce overheads by using the pilot to transmit the information.

In this embodiment of this application, the base sequence is first generated by using a specific method, and then orthogonal processing is performed on the base sequence to improve related performance (for example, adding different masks), and then is allocated to different antenna ports to generate pilots. Pilot numbers of different antenna ports are grouped according to a specific principle, and pilot signals of a same group are mapped to a same pilot resource block, thereby further improving detection performance.

This embodiment of this application provides a pilot design solution in a delay-Doppler domain, to improve pilot-related performance, thereby improving detection performance of a receiver and facilitating accurate channel estimation.

Specifically, the pilot transmission method provided in this embodiment of this application is performed by a network side, for example, a base station side. Therefore, a transmit end in this embodiment of this application is a network side, and a receive end is a terminal.

In this embodiment of this application, orthogonal processing is performed on pilots corresponding to a plurality of antenna ports and then the pilots are mapped to pilot resource blocks in a delay-Doppler domain for transmission, so that pilot overheads in a delay-Doppler domain are reduced in a multi-antenna port system, and a probability of pilot false detection and erroneous detection is reduced on the basis of ensuring performance reliability.

Optionally, the performing orthogonal processing on a pilot base sequences includes:

performing orthogonal processing on pilot base sequences of the plurality of antenna ports based on an orthogonal coverage code.

Specifically, this embodiment of the present invention provides a method for constructing a reference signal sequence, so that orthogonal processing can be performed on the pilot base sequences of the plurality of antenna ports based on the orthogonal coverage code.

For example, the base sequence may be first generated. The base sequence may be a PN sequence, a ZC sequence, or another sequence. This is not limited in this embodiment.

Then, the base sequence may be modulated to generate a first or second or third pilot sequence, and orthogonal processing may be performed on the first or second or third pilot sequence by using the orthogonal coverage code. For example, orthogonal processing may be performed on the first or second or third pilot sequence by using a Walsh-Hadamard code. This is not limited in this embodiment.

It can be understood that orthogonal coverage codes, such as Walsh-Hadamard codes, used by subsequences belonging to a same pilot sequence may be the same or different.

Optionally, pilot base sequences used by antenna ports mapped to a same pilot resource block are the same, and pilot base sequences used by antenna ports mapped to different pilot resource blocks are different; and

the performing orthogonal processing on pilot base sequences of the plurality of antenna ports based on orthogonal coverage codes includes:

performing, based on different orthogonal coverage codes, orthogonal processing on the pilot base sequences used by the antenna ports mapped to the same pilot resource block.

Optionally, this embodiment of this application proposes a pilot sequence orthogonalization manner and an association criterion for mapping a pilot sequence to a pilot resource block.

Generally, different pilot ports may be distinguished by using the following methods: (1) different pilot sequences; (2) a same pilot sequence and different orthogonal processing manners; (3) different pilot sequences and different orthogonal processing manners. According to the foregoing thinking, pilot resource mapping may be performed in a plurality of manners in a delay-Doppler domain.

Specifically, a first manner of performing pilot resource mapping in a delay-Doppler domain may be as follows: Pilot base sequences used by antenna ports mapped to a same pilot resource block may be the same.

Specifically, in a case that pilot base sequences used by antenna ports mapped to a same pilot resource block are the same, pilot base sequences used by antenna ports mapped to different pilot resource blocks are different.

Specifically, in a delay-Doppler data set sent in a same slot, pilot sequences mapped to a same pilot resource block in a delay-Doppler domain may be generated by using a same base sequence and different orthogonal processing methods, that is, different orthogonal coverage codes are used to perform orthogonal processing.

Optionally, pilots mapped to different pilot resource blocks are generated by using different base sequences.

Optionally, pilot base sequences used by antenna ports mapped to a same pilot resource block are different; and the performing orthogonal processing on pilot base sequences of the plurality of antenna ports based on orthogonal coverage codes includes:

performing, based on different orthogonal coverage codes, orthogonal processing on the pilot base sequences used by the antenna ports mapped to the same pilot resource block.

Specifically, a second manner of performing pilot resource mapping in a delay-Doppler domain may be as follows: Pilot base sequences used by antenna ports mapped to a same pilot resource block are different.

Optionally, orthogonal processing may be performed, based on different orthogonal coverage codes, on the pilot base sequences used by the antenna ports mapped to the same pilot resource block.

Optionally, pilots on different pilot resource blocks may multiplex a same base sequence, and use different orthogonal processing methods.

Specifically, in a delay-Doppler data set sent in a same slot, pilot sequences mapped to a same pilot resource block in a delay-Doppler domain may be generated by using different base sequences and different orthogonal processing methods, that is, different orthogonal coverage codes are used to perform orthogonal processing.

Optionally, pilot base sequences used by antenna ports mapped to a same pilot resource block are different; and the performing orthogonal processing on pilot base sequences of the plurality of antenna ports based on orthogonal coverage codes includes:

performing, based on a same orthogonal coverage code, orthogonal processing on the pilot base sequences used by the antenna ports mapped to the same pilot resource block.

Specifically, a third manner of performing pilot resource mapping in a delay-Doppler domain may be as follows: Pilot base sequences used by antenna ports mapped to a same pilot resource block are different.

Optionally, orthogonal processing may be performed, based on a same orthogonal coverage code, on the pilot base sequences used by the antenna ports mapped to the same pilot resource block.

Optionally, pilots on different pilot resource blocks may multiplex a same base sequence, and use different orthogonal processing methods.

Specifically, in a delay-Doppler data set sent in a same slot, pilot sequences mapped to a same pilot resource block in a delay-Doppler domain may be generated by using different base sequences and a same orthogonal processing method, that is, a same orthogonal coverage code is used to perform orthogonal processing.

Optionally, pilot base sequences used by antenna ports mapped to a same pilot resource block are different; and the method further includes:

not performing orthogonal processing on the pilot base sequences used by the antenna ports mapped to the same pilot resource block.

Specifically, a fourth manner of performing pilot resource mapping in a delay-Doppler domain may be as follows: Pilot base sequences used by antenna ports mapped to a same pilot resource block are different.

Optionally, orthogonal processing may not be performed on the pilot base sequences used by the antenna ports mapped to the same pilot resource block.

Optionally, pilots on different pilot resource blocks may multiplex a same base sequence, and use different orthogonal processing methods.

Specifically, in a delay-Doppler data set sent in a same slot, pilot sequences mapped to a same pilot resource block in a delay-Doppler domain may be generated by using different base sequences without performing orthogonal processing.

Optionally, the performing orthogonal processing on pilot base sequences of the plurality of antenna ports based on orthogonal coverage codes includes:

performing one-dimensional orthogonal processing on the pilot base sequences of the plurality of antenna ports based on the orthogonal coverage code.

Specifically, one-dimensional orthogonal processing may be performed on the pilot base sequences of the plurality of antenna ports based on the orthogonal coverage code.

Specifically, one-dimensional orthogonal processing is limited to only a row or a column, and is only applied to a dimension of a pilot signal block (a delay domain or a Doppler domain, where in this embodiment of this application, the delay domain may also be referred to as a delay dimension, and the Doppler domain may also be referred to as a Doppler dimension), and therefore it is referred to as one-dimensional orthogonal processing.

Optionally, the performing one-dimensional orthogonal processing on the pilot base sequences of the plurality of antenna ports includes:

for a target antenna port in the plurality of antenna ports, obtaining a first orthogonal coverage code corresponding to the target antenna port;
modulating a pilot base sequence of the target antenna port based on a length L of the first orthogonal coverage code, to generate a first pilot sequence of length M; and
performing dot multiplication on the first pilot sequence and a first target orthogonal coverage code of length M, where the first target orthogonal coverage code includes n first orthogonal coverage codes, where

$$M = n \times L \text{ and } n \geq 1.$$

Specifically, one-dimensional orthogonal processing may be performed on the pilot base sequences of the plurality of antenna ports in a whole segment.

Specifically, for the target antenna port in the plurality of antenna ports, the first orthogonal coverage code corresponding to the target antenna port may be first determined, and the pilot base sequence of the target antenna port is modulated based on the length L of the first orthogonal coverage code to generate the first pilot sequence of length M. It can be understood that the length of the first pilot sequence may be equal to that of the first orthogonal coverage code, or the first pilot sequence may be an integer multiple of the first orthogonal coverage code, thereby facilitating dot multiplication.

Optionally, if the length of the first pilot sequence is equal to that of the first orthogonal coverage code, the first orthogonal coverage code is directly used as a first target coverage code, and dot multiplication is performed on the first target coverage code and the first pilot sequence to complete orthogonal processing on the first pilot sequence.

Optionally, if the first pilot sequence is an integer multiple of the first orthogonal coverage code, for example, n times, n first orthogonal coverage codes may be combined into a first target coverage code of equal length to the first pilot sequence, and dot multiplication is performed on the first target coverage code and the first pilot sequence to complete orthogonal processing on the first pilot sequence.

Specifically, for example, the orthogonal coverage code is a Walsh-Hadamard. If a length of a k-order Walsh-Hadamard code is $2^k$, the first pilot sequence of length M may be generated, where $M = 2^k$. Then, dot multiplication is performed on the first pilot sequence of length M and the selected k-order Walsh-Hadamard code to obtain a processed pilot sequence, that is, a pilot (pilot signal).

Optionally, when the first orthogonal coverage code corresponding to the target antenna port is obtained, any one of the following may be ensured:

> pilot base sequences used by target antenna ports mapped to a same pilot resource block are the same, and first orthogonal coverage codes used in base sequences are different; and
> pilot base sequences used by target antenna ports mapped to a same pilot resource block are different, and first orthogonal coverage codes used in base sequences are the same or different, or orthogonal processing is not performed.

Optionally, the performing one-dimensional orthogonal processing on the pilot base sequences includes:

> for a target antenna port in the plurality of antenna ports, obtaining a second orthogonal coverage code corresponding to the target antenna port;
> modulating a pilot base sequence of the target antenna port based on a length P of the second orthogonal coverage code, to generate a second pilot sequence corresponding to the target antenna port, where the second pilot sequence includes one or more second pilot subsequences of length Q; and
> sequentially performing dot multiplication on the plurality of second pilot subsequences and a second target orthogonal coverage code of length Q, where the second target orthogonal coverage code includes r second orthogonal coverage codes, where

$$Q = r \times P \text{ and } r \geq 1.$$

Specifically, one-dimensional orthogonal processing may be performed on the pilot base sequences of the plurality of antenna ports through segmentation.

Specifically, for the target antenna port in the plurality of antenna ports, the second orthogonal coverage code corresponding to the target antenna port may be first determined, and the pilot base sequence of the target antenna port is modulated based on the length P of the second orthogonal coverage code to generate the second pilot sequence corresponding to the target antenna port. Optionally, the second pilot sequence may include one or more second pilot subsequences of length Q, the length of the second pilot subsequence is equal to that of the second orthogonal coverage code, or the second pilot subsequence may be an integer multiple of the second orthogonal coverage code, thereby facilitating dot multiplication.

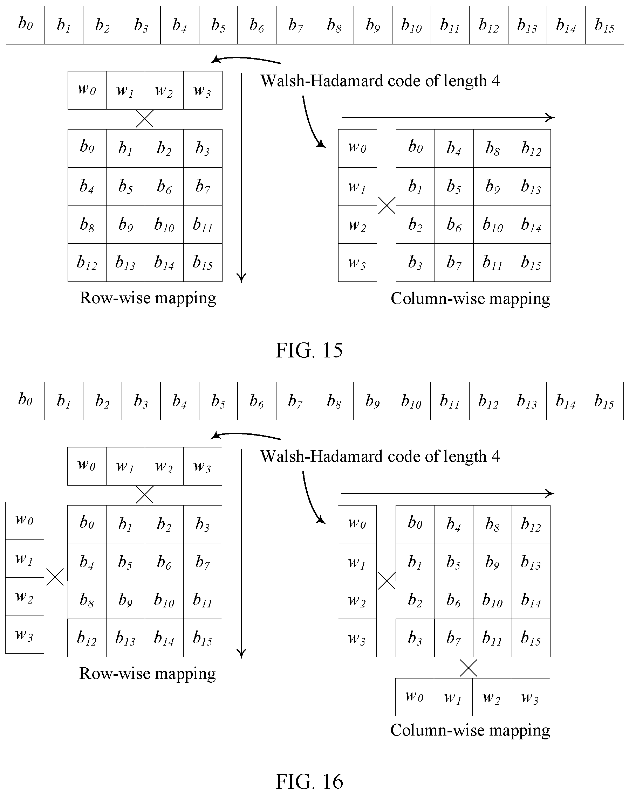

FIG. 15 is a first schematic diagram of orthogonal processing according to an embodiment of this application. As shown in FIG. 15, for the target antenna port in the plurality of antenna ports, the second orthogonal coverage code w0, w1, w2, and w3 corresponding to the target antenna port may be first determined, and the second pilot sequence b0, b1, b2,... b15 corresponding to the target antenna port may be obtained. Optionally, the second pilot sequence may include one or more second pilot subsequences of length Q, that is, a subsequence b0, b1, b2, b3, a subsequence b4, b5, b6, b7, a subsequence b8, b9, b10, b11, and a subsequence b12, b13, b14, b15. The length of the second pilot subsequence is equal to that of the second orthogonal coverage code. Then, dot multiplication is sequentially performed on w0, w1, w2, w3 and the subsequence b0, b1, b2, b3, the subsequence b4, b5, b6, b7, the subsequence b8, b9, b10, b11, and the subsequence b12, b13, b14, b15.

Optionally, if the length of the second pilot subsequence is equal to that of the second orthogonal coverage code, the second orthogonal coverage code is directly used as a second target coverage code, and dot multiplication is sequentially performed on the second target coverage code and the plurality of second pilot subsequences to complete orthogonal processing on the second pilot sequence.

Optionally, if the second pilot subsequence is an integer multiple of the second orthogonal coverage code, for example, r times, r second orthogonal coverage codes may be combined into a second target coverage code of equal length to the second pilot subsequence, and dot multiplication is performed on the second target coverage code and the plurality of second pilot subsequences to complete orthogonal processing on the second pilot sequence.

Specifically, for example, the orthogonal coverage code is a Walsh-Hadamard code. The second pilot sequence is equally divided into $2^{k-m}$ second pilot subsequences, and a length of each subsequence is Q. A processed second pilot sequence is obtained by performing dot multiplication on a Walsh-Hadamard code of length $P = 2^m$ or a combination thereof with each second pilot subsequence.

Optionally, when the second orthogonal coverage code corresponding to the target antenna port is obtained, any one of the following may be ensured:

pilot base sequences used by target antenna ports mapped to a same pilot resource block are the same, and first orthogonal coverage codes used in base sequences are different; and
pilot base sequences used by target antenna ports mapped to a same pilot resource block are different, and first orthogonal coverage codes used in base sequences are the same or different, or orthogonal processing is not performed.

Optionally, in a case that RE resources of second pilot subsequences of different second pilot sequences are orthogonal in a delay-Doppler domain, orthogonal coverage codes corresponding to the second pilot subsequences of the different second pilot sequences are the same or different; or
in a case that RE resources of second pilot subsequences of different second pilot sequences are not orthogonal in a delay-Doppler domain, orthogonal coverage codes corresponding to the second pilot subsequences of the different second pilot sequences are different.

Specifically, subsequences belonging to different second pilot sequences may use a same orthogonal coverage code or different orthogonal coverage codes such as a Walsh-Hadamard code when RE resources in a delay-Doppler domain are orthogonal.

Specifically, subsequences belonging to different second pilot sequences may use different orthogonal coverage codes such as a Walsh-Hadamard code when RE resources in a delay-Doppler domain are not orthogonal (overlapping).

It can be understood that, for example, a row represents a delay domain, and a column represents a Doppler domain. A resource block size is k*1, and row-wise mapping means that d(0), d(1),... and d(k-1) are first successively mapped to resource elements with a delay dimension of 0 and a Doppler dimension of 0 to k-1, and then d(0), d(1),... and d(k-1) are mapped to resource elements with a delay dimension of 1 and a Doppler dimension of 0 to k-1, and so on. Alternatively, on the contrary, for example, a row represents a Doppler domain, and a column represents a delay domain. A resource block size is k*1, and row-wise mapping means that d(0), d(1),... and d(k-1) are first successively mapped to resource elements with a Doppler dimension of 0 and a delay dimension of 0 to k-1, and then d(0), d(1),... and d(k-1) are mapped to resource elements with a Doppler dimension of 1 and a delay dimension of 0 to k-1, and so on.

Optionally, the obtaining a second orthogonal coverage code corresponding to the target antenna port includes:

in a case that the second pilot sequence is mapped row-wise to a pilot resource block, obtaining a second orthogonal coverage code corresponding to the target antenna port in a delay domain, where
the sequentially performing dot multiplication on the plurality of second pilot subsequences and a second target orthogonal coverage code of length Q includes:
performing dot multiplication on the second target orthogonal coverage code and a second pilot subsequence in each row of the pilot resource block.

It can be understood that, in a delay-Doppler domain, "row-wise/column-wise" is a relative concept and may include but is not limited to the following cases:

a row represents a Doppler domain, and a column represents a delay domain, that is, a row represents a Doppler dimension, and a column represents a delay dimension; and
a row represents a delay domain, and a column represents a Doppler domain, that is, a row represents a delay dimension, and a column represents a Doppler dimension.

Specifically, for example, a row represents a delay domain, and a column represents a Doppler domain. The second pilot sequence may be mapped row-wise to a pilot resource block corresponding to the target antenna port, where each row includes one second pilot subsequence; and the second orthogonal coverage code corresponding to the target antenna port in a delay domain is obtained, and dot multiplication is performed on the second target orthogonal coverage code and the second pilot subsequence in each row of the pilot resource block.

Optionally, for example, the second orthogonal coverage code is a Walsh-Hadamard code. When the pilot sequence is mapped row-wise (row-wise) to the pilot resource block, a length of the second target orthogonal coverage code is the same as that in each row of the pilot resource block, that is, is the same as that of the second pilot subsequence. The second pilot sequence is divided into several second pilot subsequences, the second pilot subsequences are arranged row-wise to generate a subsequence signal block, and each row of the signal block is multiplied to generate a pilot signal block.

Optionally, the obtaining a second orthogonal coverage code corresponding to the target antenna port includes:

in a case that the second pilot sequence is mapped column-wise to a pilot resource block, obtaining a second orthogonal coverage code corresponding to the target antenna port in a Doppler domain, where the sequentially performing dot multiplication on the plurality of second pilot subsequences and a second target orthogonal coverage code of length Q includes: performing dot multiplication on the second target orthogonal coverage code and a second pilot subsequence in each column of the pilot resource block.

Specifically, for example, a row represents a delay domain, and a column represents a Doppler domain. The second pilot sequence may be mapped column-wise to a pilot resource block corresponding to the target antenna port, where each column includes one second pilot subsequence; and the second orthogonal coverage code corresponding to the target antenna port in a Doppler domain is obtained, and dot multiplication is performed on the second target orthogonal coverage code and the second pilot subsequence in each column of the pilot resource block.

Optionally, for example, the second orthogonal coverage code is a Walsh-Hadamard code. When the second pilot sequence is mapped column-wise to the pilot resource block, a length of the second target orthogonal coverage code is the same as that in each column of the pilot resource block, that is, is the same as that of the second pilot subsequence. The second pilot sequence is divided into several second pilot subsequences, the second pilot subsequences are arranged column-wise to generate a subsequence signal block, and each column of the signal block is multiplied to generate a pilot signal block.

It can be understood that, for example, a row represents a Doppler domain, and a column represents a delay domain. A resource block size is k*1, and column-wise mapping means that d(0), d(1),... and d(k-1) are first successively mapped to resource elements with a delay dimension of 0 and a Doppler dimension of 0 to k-1, and then d(0), d(1),... and d(k-1) are mapped to resource elements with a delay dimension of 1 and a Doppler dimension of 0 to k-1, and so on. Alternatively, on the contrary, for example, a row represents a delay domain, and a column represents a Doppler domain. A resource block size is k*1, and column-wise mapping means that d(0), d(1),... and d(k-1) are first successively mapped to resource elements with a Doppler dimension of 0 and a delay dimension of 0 to k-1, and then d(0), d(1),... and d(k-1) are mapped to resource elements with a Doppler dimension of 1 and a delay dimension of 0 to k-1, and so on.

In other words, in this embodiment of this application, in a manner of mapping the second pilot sequence to the pilot resource block, it is assumed that a Doppler domain is before a delay domain, or a delay domain is before a Doppler domain.

Optionally, the obtaining a second orthogonal coverage code corresponding to the target antenna port includes:

in a case that the second pilot sequence is mapped row-wise to a pilot resource block, obtaining a second orthogonal coverage code corresponding to the target antenna port in a Doppler domain, where the sequentially performing dot multiplication on the plurality of second pilot subsequences and a second target orthogonal coverage code of length Q includes: performing dot multiplication on the second target orthogonal coverage code and a second pilot subsequence in each row of the pilot resource block.

Specifically, for example, a row represents a Doppler domain, and a column represents a delay domain. The second pilot sequence may be mapped row-wise to a pilot resource block corresponding to the target antenna port, where each row includes one second pilot subsequence; and the second orthogonal coverage code corresponding to the target antenna port in a Doppler domain is obtained, and dot multiplication is performed on the second target orthogonal coverage code and the second pilot subsequence in each row of the pilot resource block.

Optionally, for example, the second orthogonal coverage code is a Walsh-Hadamard code. When the second pilot sequence is mapped row-wise to the pilot resource block, a length of the second target orthogonal coverage code is the same as that in each row of the pilot resource block, that is, is the same as that of the second pilot subsequence. The second pilot sequence is divided into several second pilot subsequences, the second pilot subsequences are arranged row-wise to generate a subsequence signal block, and each row of the signal block is multiplied to generate a pilot signal block.

Optionally, the obtaining a second orthogonal coverage code corresponding to the target antenna port includes:

in a case that the second pilot sequence is mapped column-wise to a pilot resource block, obtaining a second orthogonal coverage code corresponding to the target antenna port in a delay domain, where
the sequentially performing dot multiplication on the plurality of second pilot subsequences and a second target orthogonal coverage code of length Q includes:
performing dot multiplication on the second target orthogonal coverage code and a second pilot subsequence in each column of the pilot resource block.

Specifically, for example, a row represents a Doppler domain, and a column represents a delay domain. The second pilot sequence may be mapped column-wise to a pilot resource block corresponding to the target antenna port, where each column includes one second pilot subsequence; and the second orthogonal coverage code corresponding to the target antenna port in a delay domain is obtained, and dot multiplication is performed on the second target orthogonal coverage code and the second pilot subsequence in each column of the pilot resource block.

Optionally, for example, the second orthogonal coverage code is a Walsh-Hadamard code. When the second pilot sequence is mapped column-wise to the pilot resource block, a length of the second target orthogonal coverage code is the same as that in each column of the pilot resource block, that is, is the same as that of the second pilot subsequence. The second pilot sequence is divided into several second pilot subsequences, the second pilot subsequences are arranged column-wise to generate a subsequence signal block, and each column of the signal block is multiplied to generate a pilot signal block.

Optionally, the performing orthogonal processing on pilot base sequences of the plurality of antenna ports based on orthogonal coverage codes includes:
performing two-dimensional orthogonal processing on the pilot base sequences of the plurality of antenna ports based on the orthogonal coverage code.

Specifically, two-dimensional orthogonal processing may be performed on the pilot base sequences of the plurality of antenna ports based on the orthogonal coverage code.

Specifically, two-dimensional orthogonal processing includes row processing and column processing, and is applied to a delay domain and a Doppler domain of a pilot signal block, and therefore is referred to as two-dimensional orthogonal processing.

Optionally, the performing two-dimensional orthogonal processing on the pilot base sequences of the plurality of antenna ports includes:

modulating the pilot base sequence based on a length a of a pilot resource block to which the antenna port is mapped in a delay domain and a length b of the pilot resource block in a Doppler domain, to generate a third pilot sequence of length R, where $R=2^k$, $a=2^\alpha$, $b=2^\beta$, and $\alpha+\beta=k$;
mapping the third pilot sequence row-wise or column-wise to the pilot resource block; and
obtaining, based on the length a of the pilot resource block in a delay domain and the length b of the pilot resource block in a Doppler domain, an orthogonal coverage code of length c in a delay domain and an orthogonal coverage code of length d in a Doppler domain, where $a=e\times c$, $b=f\times d$, $e\geq1$, and $f>1$; and
performing dot multiplication row-wise on the orthogonal coverage code of length c and the third pilot sequence in the pilot resource block, and performing dot multiplication column-wise on the orthogonal coverage code of length d and the third pilot sequence in the pilot resource block.

Specifically, this embodiment of this application provides a method for performing two-dimensional orthogonal processing on a pilot sequence by using an orthogonal coverage code.

Optionally, when a row represents a delay domain and a column represents a Doppler domain, two groups of required orthogonal coverage codes, such as Walsh-Hadamard codes, may be generated according to a side length of a pilot sequence signal block, where a code word length of a Walsh-Hadamard code corresponding to one group in a delay domain is *a* or is divisible by *a*, and a code word length of a Walsh-Hadamard code corresponding to the other group in a Doppler domain is *b* or is divisible by *b*. Dot multiplication is performed row-wise on the code word whose length is *a* or is divisible by *a* and the pilot sequence signal block, and dot multiplication is performed column-wise on the code word whose length is *b* or is divisible by *b* and the pilot sequence signal block.

Optionally, when a row represents a Doppler domain and a column represents a delay domain, two groups of required orthogonal coverage codes, such as Walsh-Hadamard codes, may be generated according to a side length of a pilot sequence signal block, where a code word length of a Walsh-Hadamard code corresponding to one group in a Doppler domain is *b* or is divisible by *b*, and a code word length of a Walsh-Hadamard code corresponding to the other group in a delay domain is *a* or is divisible by *a*. Dot multiplication is performed column-wise on the code word whose length is *a* or is divisible by *a* and the pilot sequence signal block, and dot multiplication is performed row-wise on the code word whose length is *b* or is divisible by *b* and the pilot sequence signal block.

For example, the orthogonal coverage code is a Walsh-Hadamard code. The base sequence may be first generated, and the base sequence may be a PN sequence, a ZC sequence, or another sequence.

Then, the base sequence may be modulated to generate the third pilot sequence, and two-dimensional orthogonal processing may be performed on the first or second or third pilot sequence by using the Walsh-Hadamard code.

Then, the pilot sequence signal block may be determined according to a size of the pilot resource block, that is, a one-dimensional third pilot sequence is mapped row-wise or column-wise to a two-dimensional pilot sequence signal block.

FIG. 16 is a second schematic diagram of orthogonal processing according to an embodiment of this application. As shown in FIG. 16, for the target antenna port in the plurality of antenna ports, the third orthogonal coverage code b0, b1, b2,... b15 corresponding to the target antenna port may be first determined, and the third pilot sequence is mapped row-wise or column-wise to the pilot resource block to obtain a subsequence b0, b1, b2, b3, a subsequence b4, b5, b6, b7, a subsequence b8, b9, b10, b11, and a subsequence b12, b13, b14, b15. Then, two groups of second orthogonal coverage codes w0, w1, w2, w3 may be obtained. Dot multiplication may be sequentially performed on the two groups of second orthogonal coverage codes w0, w1, w2, w3 and the subsequence b0, b1, b2, b3, the subsequence b4, b5, b6, b7, the subsequence b8, b9, b10, b11, and the subsequence b12, b13, b14, b15. For example, first, dot multiplication may be sequentially performed on the second orthogonal coverage codes w0, w1, w2, w3 in a delay domain and the subsequence b0, b1, b2, b3, the subsequence b4, b5, b6, b7, the subsequence b8, b9, b10, b11, and the subsequence b12, b13, b14, b15, and then dot multiplication may be sequentially performed on the second orthogonal coverage codes w0, w1, w2, w3 in a Doppler domain and the subsequence b0, b1, b2, b3, the subsequence b4, b5, b6, b7, the subsequence b8, b9, b10, b11, and the subsequence b12, b13, b14, b15 to obtain a pilot signal (pilot).

For example, the length of the third pilot sequence is $\{\tilde{L}: \tilde{L} = 2^k\}$. The third pilot sequence may be mapped row-wise or column-wise to the pilot resource block to form a pilot sequence signal block. A side length of the pilot sequence signal block is denoted as (*a*,*b*) and $\{(a,b): a = 2^\alpha, b = 2^\beta, \alpha + \beta = k\}$, where *a* is a length of each row, *b* is a length of each column, and a unit is a quantity of REs in a delay-Doppler domain.

Two groups of Walsh-Hadamard codes are generated, where a code word length of one group is $2^\gamma$ and a code word length of the other group is $2^\delta$. $2^{\alpha-\gamma}$ code words of length $2^\gamma$ are serially combined and dot multiplication is performed row-wise on the code words and the pilot sequence signal block, and dot multiplication is performed column-wise on $2^{\beta-\delta}$ code words of length $2^\delta$ and the pilot sequence signal block.

Different pilot sequence signal blocks use different code words. A difference lies in that Vi c (1,2, ..., $2^{\alpha-\gamma}$), $\overline{w}_k(i) \neq \overline{w}_l(i)$, where $\overline{w}_k(i)$ and $\overline{w}_l(i)$ are $i^{th}$ code words on a code string that are used by third pilot sequences $\overline{b}_k$ and $\overline{b}_l$.

Optionally, the method further includes:
obtaining the orthogonal coverage code based on an orthogonal coverage code preconfiguration table.

Specifically, a code division multiplexing (code division multiplexing, CDM) group in a delay-Doppler domain may be defined, and orthogonal coverage code types used by different pilot sequences in different pilot resource blocks are determined in a manner of querying the orthogonal coverage code preconfiguration table.

Optionally, to reduce complexity, a maximum code length of the used orthogonal coverage code may be limited to 4, and the orthogonal coverage code preconfiguration table may be the following Table 1 to Table 9, that is, the following Table 1 to Table 9 may be obtained.

**Table 1 CDM group in a delay-Doppler domain: "No CDM"**

| index | Delay domain | Doppler domain |
|-------|--------------|----------------|
| 0     | 1            | 1              |

**Table 2 CDM group in a delay-Doppler domain: "Delay CDM2"**

| index | Delay domain | Doppler domain |
|-------|--------------|----------------|
| 0     | [1,1]        | 1              |
| 1     | [1, - 1]     | 1              |

**Table 3 CDM group in a delay-Doppler domain: "Doppler CDM2"**

| index | Delay domain | Doppler domain |
|---|---|---|
| 0 | 1 | [1,1] |
| 1 | 1 | [1, - 1] |

**Table 4 CDM group in a delay-Doppler domain: "Delay CDM4"**

| index | Delay domain | Doppler domain |
|---|---|---|
| 0 | [1,1,1,1] | 1 |
| 1 | [1, - 1,1, - 1] | 1 |
| 2 | [1,1, - 1, - 1] | 1 |
| 3 | [1, - 1, - 1,1] | 1 |

**Table 5 CDM group in a delay-Doppler domain: "Doppler CDM4"**

| index | Delay domain | Doppler domain |
|---|---|---|
| 0 | 1 | [1,1,1,1] |
| 1 | 1 | [1,1, - 1, - 1] |
| 2 | 1 | [1, - 1,1, - 1] |
| 3 | 1 | [1, -1, - 1,1] |

**Table 6 CDM group in a delay-Doppler domain: "Delay CDM2 Doppler CDM2"**

| index | Delay domain | Doppler domain |
|---|---|---|
| 0 | [1,1] | [1,1] |
| 1 | [1, - 1] | [1,1] |
| 2 | [1,1] | [1, - 1] |
| 3 | [1, - 1] | [1, - 1] |

**Table 7 CDM group in a delay-Doppler domain: "Delay CDM4 Doppler CDM2"**

| index | Delay domain | Doppler domain |
|---|---|---|
| 0 | [1,1,1,1] | [1,1] |
| 1 | [1,1, - 1, - 1] | [1,1] |
| 2 | [1, - 1,1, - 1] | [1,1] |
| 3 | [1, - 1, - 1,1] | [1,1] |
| 4 | [1,1,1,1] | [1, - 1] |
| 5 | [1,1, - 1, - 1] | [1, - 1] |
| 6 | [1, - 1,1, - 1] | [1, - 1] |
| 7 | [1, - 1, - 1,1] | [1, -1] |

**Table 8 CDM group in a delay-Doppler domain: "Delay CDM2 Doppler CDM4"**

| index | Delay domain | Doppler domain |
|---|---|---|
| 0 | [1,1] | [1,1,1,1] |
| 1 | [1,1] | [1,1, - 1, - 1] |
| 2 | [1,1] | [1, - 1,1, - 1] |
| 3 | [1,1] | [1, - 1, - 1,1] |
| 4 | [1, - 1] | [1,1,1,1] |
| 5 | [1, - 1] | [1,1, - 1, - 1] |
| 6 | [1, - 1] | [1, - 1,1, - 1] |
| 7 | [1, - 1] | [1, -1, - 1,1] |

**Table 9 CDM group in a delay-Doppler domain: "Delay CDM4 Doppler CDM4"**

| index | Delay domain | Doppler domain |
|---|---|---|
| 0 | [1,1,1,1] | [1,1,1,1] |
| 1 | [1,1, - 1, - 1] | [1,1,1,1] |
| 2 | [1, - 1,1, - 1] | [1,1,1,1] |
| 3 | [1, - 1, - 1,1] | [1,1,1,1] |
| 4 | [1,1,1,1] | [1,1, - 1, - 1] |
| 5 | [1,1, - 1, - 1] | [1,1, - 1, - 1] |
| 6 | [1, - 1,1, - 1] | [1,1, - 1, - 1] |
| 7 | [1, - 1, - 1,1] | [1,1, - 1, - 1] |
| 8 | [1,1,1,1] | [1, - 1,1, - 1] |
| 9 | [1,1, - 1, - 1] | [1, - 1,1, - 1] |
| 10 | [1, - 1,1, - 1] | [1, - 1,1, - 1] |
| 11 | [1, - 1, - 1,1] | [1, - 1,1, - 1] |
| 12 | [1,1,1,1] | [1, - 1, - 1,1] |
| 13 | [1,1, - 1, - 1] | [1, -1, - 1,1] |
| 14 | [1, - 1,1, - 1] | [1, -1, - 1,1] |
| 15 | [1, - 1, - 1,1] | [1, -1, - 1,1] |

It can be understood that a maximum code length of the orthogonal coverage code is 4, which is used only as an embodiment, and is not used as a limitation of this application.

Optionally, the orthogonal coverage code includes:

a Walsh-Hadamard code.

Specifically, the orthogonal coverage code may be a Walsh-Hadamard code.

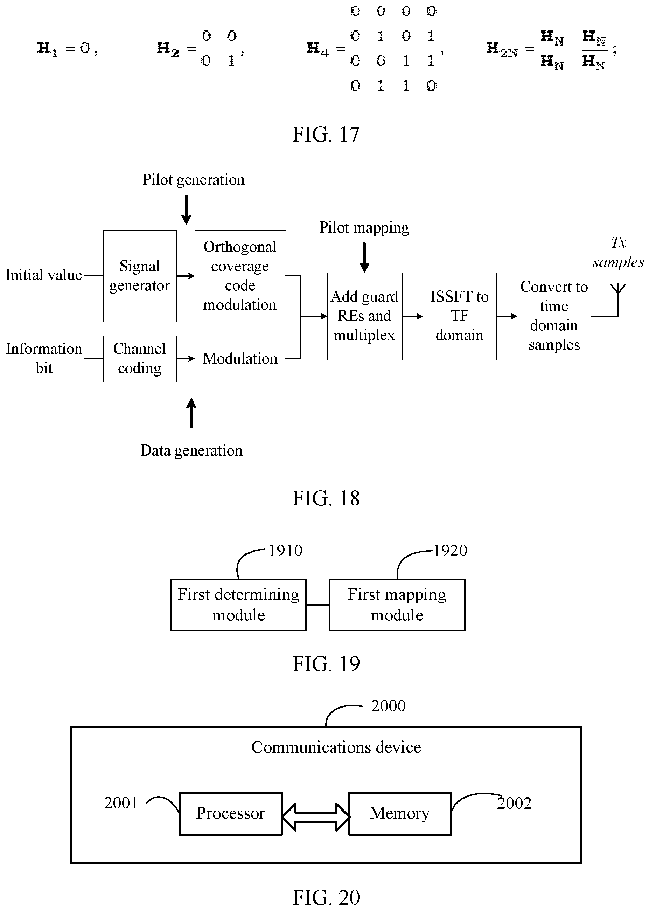

Optionally, FIG. 17 is a schematic diagram of a Walsh-Hadamard code generation manner according to an embodiment of this application. A Walsh-Hadamard code may be generated by using the method shown in FIG. 17. $H_1$

$$H_2 = \begin{bmatrix} 0 & 0 \\ 0 & 1 \end{bmatrix} \quad H_4 = \begin{bmatrix} 0 & 0 & 0 & 0 \\ 0 & 1 & 0 & 1 \\ 0 & 0 & 1 & 1 \\ 0 & 1 & 1 & 0 \end{bmatrix} \quad H_{2N} = \begin{bmatrix} H_N & H_N \\ H_N & \overline{H_N} \end{bmatrix}$$

=0, or , or , or in FIG. 17 may be used. Taking $H_{2N}$

as an example, a code in a lower right corner of a matrix is complemented by the first three locations, that is, codes of the other three locations use a wh matrix of an upper level, that is, $H_N$.

$\overline{H_N}$ represents taking a complement set of elements in $H_N$. Taking $N = 2$ as an example,

$$H_2 = \begin{bmatrix} 0 & 0 \\ 0 & 1 \end{bmatrix}, \overline{H_2} = \begin{bmatrix} 1 & 1 \\ 1 & 0 \end{bmatrix}.$$

In addition, when being applied to an actual system, [-1,1] may represent bits [1,0], to avoid too many zeros in a pilot sequence after orthogonal processing. That is, $1-2*H_N$ may be taken, and a matrix $W_N$ whose element value is [-1,1] is obtained. Each row/column of $W_N$ is a Walsh-Hadamard code word.

It can be understood that $1-2*H_N$ is only used as an embodiment instead of a limitation to this application. A manner of generating an orthogonal coverage code that can achieve a similar effect is applicable to the embodiments of this application.

Optionally, the method further includes:

generating the pilot base sequence based on a protocol stipulation.

Specifically, the pilot base sequence may be first generated based on the protocol stipulation, and is further modulated to obtain the first or second or third pilot sequence, and then orthogonal processing is performed.

Optionally, the base sequence may be generated according to a method specified in the protocol and an initial value, and then is modulated, and is multiplied by the orthogonal coverage code to generate a pilot (that is, a pilot signal).

Optionally, FIG. 18 is a schematic flowchart of pilot insertion in a delay-Doppler domain according to an embodiment of this application. As shown in FIG. 18, an information bit of data is encoded and modulated to generate a modulation symbol in a delay-Doppler domain. A pilot and a data symbol are mapped to a grid (similar to an OFDM grid in a time-frequency domain) of the delay-Doppler domain, and each grid is referred to as one RE in the delay-Doppler domain. REs of the pilot and the data are orthogonal, and a guard interval is added in the middle to avoid mutual interference between receive ends.

Optionally, the pilot base sequence includes:

a PN sequence or a ZC sequence.

Specifically, the pilot base sequence may include but is not limited to a PN sequence, a ZC sequence, or another similar sequence.

Optionally, in a case that the pilot base sequence includes a PN sequence, the pilot base sequence is associated with a pilot resource block ID or a pilot signal block group ID or a pilot ID of a corresponding pilot resource block by using first association information, where

the pilot ID is in a one-to-one correspondence with an antenna port number, and the pilot ID is in a one-to-one correspondence with a receive end UE ID; and
the first association information includes any one or a combination of the following:

an initial value of a linear feedback shift register;
a cyclic shift value of a generated sequence; and
an intercept location of a pilot in a shift register output sequence.

Optionally, in a case that the pilot base sequence includes a PN sequence, the pilot base sequence may be associated with a pilot resource block ID of a corresponding pilot resource block by using first association information.

Optionally, in a case that the pilot base sequence includes a PN sequence, the pilot base sequence may be associated with a pilot signal block group ID of a corresponding pilot resource block by using first association information.

Optionally, in a case that the pilot base sequence includes a PN sequence, the pilot base sequence may be associated with a pilot ID of a corresponding pilot resource block by using first association information, where

the pilot ID is in a one-to-one correspondence with an antenna port number, and the pilot ID is in a one-to-one correspondence with a receive end UE ID; and
the first association information may include but is not limited to any one or a combination of the following:

an initial value of a linear feedback shift register;
a cyclic shift value of a generated sequence; and
an intercept location of a pilot in a shift register output sequence.

Optionally, in a case that the pilot base sequence includes a ZC sequence, the pilot base sequence is associated with a pilot resource block ID or a pilot signal block group ID or a pilot ID of a corresponding pilot resource block by using second association information, where

the pilot ID is in a one-to-one correspondence with an antenna port number, and the pilot ID is in a one-to-one correspondence with a receive end UE ID; and
the second association information includes any one or a combination of the following:

a ZC sequence root value; and
a cyclic shift value.

Optionally, in a case that the pilot base sequence includes a ZC sequence, the pilot base sequence may be associated with a pilot resource block ID of a corresponding pilot resource block by using second association information.
Optionally, in a case that the pilot base sequence includes a ZC sequence, the pilot base sequence may be associated with a pilot signal block group ID of a corresponding pilot resource block by using first association information.
Optionally, in a case that the pilot base sequence includes a ZC sequence, the pilot base sequence may be associated with a pilot ID of a corresponding pilot resource block by using first association information, where

the pilot ID is in a one-to-one correspondence with an antenna port number, and the pilot ID is in a one-to-one correspondence with a receive end UE ID; and
the second association information may include but is not limited to any one or a combination of the following:

a ZC sequence root value; and
a cyclic shift value.

Optionally, in a case that pilot base sequences used by antenna ports mapped to a same pilot resource block are the same, and pilot base sequences used by antenna ports mapped to different pilot resource blocks are different, an orthogonal coverage code corresponding to the pilot base sequence is associated with the antenna port number.
Optionally, this embodiment of this application proposes a pilot sequence orthogonalization manner and an association criterion for mapping a pilot sequence to a pilot resource block.
Generally, different pilot ports may be distinguished by using the following methods: (1) different pilot sequences; (2) a same pilot sequence and different orthogonal processing manners; (3) different pilot sequences and different orthogonal processing manners.
Specifically, in a case that pilot base sequences used by antenna ports mapped to a same pilot resource block are the same, and pilot base sequences used by antenna ports mapped to different pilot resource blocks are different, an orthogonal coverage code corresponding to the pilot base sequence may be associated with the antenna port number, thereby facilitating distinguishing of different pilot ports.
Optionally, in a case that pilot base sequences used by antenna ports mapped to a same pilot resource block are different, an orthogonal coverage code corresponding to the pilot base sequence is associated with the pilot resource block ID, the pilot signal block group ID, or the antenna port number.
Optionally, in a case that the pilot base sequences used by the antenna ports mapped to the same pilot resource block are different, the orthogonal coverage code corresponding to the pilot base sequence is associated with the pilot resource block ID, the pilot signal block group ID, or the antenna port number, thereby facilitating distinguishing of different pilot ports.
In this embodiment of this application, orthogonal processing is performed on pilots corresponding to a plurality of antenna ports and then the pilots are mapped to pilot resource blocks in a delay-Doppler domain for transmission, so that pilot overheads in a delay-Doppler domain are reduced in a multi-antenna port system, and a probability of pilot false detection and erroneous detection is reduced on the basis of ensuring performance reliability.
It should be noted that the pilot transmission method provided in the embodiments of this application may be performed by a pilot transmission apparatus, or a control module that is in the pilot transmission apparatus and that is configured to perform the pilot transmission method. In the embodiments of this application, that the pilot transmission apparatus performs the pilot transmission method is used as an example to describe the pilot transmission apparatus provided in the embodiments of this application.
FIG. 19 is a schematic structural diagram of a pilot transmission apparatus according to an embodiment of this application. As shown in FIG. 19, the apparatus is applied to a network device, and the apparatus includes the following modules: a first determining module 1910 and a first mapping module 1920.
The first determining module 1910 is configured to: perform orthogonal processing on a pilot base sequence, and determine pilots corresponding to a plurality of antenna ports.

The first mapping module 1920 is configured to map the pilots corresponding to the plurality of antenna ports to a pilot resource block, where

a pilot corresponding to one antenna port is mapped to one pilot resource block.

Specifically, the pilot transmission apparatus may perform orthogonal processing on the pilot base sequence and determine the pilots corresponding to the plurality of antenna ports by using the first determining module 1910; and then map the pilots corresponding to the plurality of antenna ports to a pilot resource block for transmission by using the first mapping module 1920.

It should be noted herein that the foregoing apparatus provided in this embodiment of this application can implement all method steps implemented in the foregoing pilot transmission method embodiment, and can achieve a same technical effect. Herein, parts the same as those in the method embodiment and a beneficial effect are not described in detail.

In this embodiment of this application, orthogonal processing is performed on pilots corresponding to a plurality of antenna ports and then the pilots are mapped to pilot resource blocks in a delay-Doppler domain for transmission, so that pilot overheads in a delay-Doppler domain are reduced in a multi-antenna port system, and a probability of pilot false detection and erroneous detection is reduced on the basis of ensuring performance reliability.

Optionally, the first determining module is further configured to:

perform orthogonal processing on pilot base sequences of the plurality of antenna ports based on an orthogonal coverage code.

Optionally, pilot base sequences used by antenna ports mapped to a same pilot resource block are the same, and pilot base sequences used by antenna ports mapped to different pilot resource blocks are different; and

the first determining module is further configured to:

perform, based on different orthogonal coverage codes, orthogonal processing on the pilot base sequences used by the antenna ports mapped to the same pilot resource block.

Optionally, pilot base sequences used by antenna ports mapped to a same pilot resource block are different; and

the first determining module is further configured to:

perform, based on different orthogonal coverage codes, orthogonal processing on the pilot base sequences used by the antenna ports mapped to the same pilot resource block.

Optionally, pilot base sequences used by antenna ports mapped to a same pilot resource block are different; and

the first determining module is further configured to:

perform, based on a same orthogonal coverage code, orthogonal processing on the pilot base sequences used by the antenna ports mapped to the same pilot resource block.

Optionally, pilot base sequences used by antenna ports mapped to a same pilot resource block are different; and

the apparatus further includes:

a first processing module, configured to not perform orthogonal processing on the pilot base sequences used by the antenna ports mapped to the same pilot resource block.

Optionally, the first determining module is further configured to:

perform one-dimensional orthogonal processing on the pilot base sequences of the plurality of antenna ports based on the orthogonal coverage code.

Optionally, the first determining module is further configured to:

for a target antenna port in the plurality of antenna ports, obtain a first orthogonal coverage code corresponding to the target antenna port;

modulate a pilot base sequence of the target antenna port based on a length L of the first orthogonal coverage code, to generate a first pilot sequence of length M; and

perform dot multiplication on the first pilot sequence and a first target orthogonal coverage code of length M, where the first target orthogonal coverage code includes n first orthogonal coverage codes, where

$$M = n \times L \text{ and } n \geq 1.$$

Optionally, the first determining module is further configured to:

for a target antenna port in the plurality of antenna ports, obtain a second orthogonal coverage code corresponding to the target antenna port;

modulate a pilot base sequence of the target antenna port based on a length P of the second orthogonal coverage code, to generate a second pilot sequence corresponding to the target antenna port, where the second pilot sequence includes one or more second pilot subsequences of length Q; and

sequentially perform dot multiplication on the plurality of second pilot subsequences and a second target orthogonal coverage code of length Q, where the second target orthogonal coverage code includes r second orthogonal coverage codes, where

$$Q=r\times P \text{ and } r\geq 1.$$

Optionally, in a case that RE resources of second pilot subsequences of different second pilot sequences are orthogonal in a delay-Doppler domain, orthogonal coverage codes corresponding to the second pilot subsequences of the different second pilot sequences are the same or different; or

in a case that RE resources of second pilot subsequences of different second pilot sequences are not orthogonal in a delay-Doppler domain, orthogonal coverage codes corresponding to the second pilot subsequences of the different second pilot sequences are different.

Optionally, the first determining module is further configured to:

in a case that the second pilot sequence is mapped row-wise to a pilot resource block, obtain a second orthogonal coverage code corresponding to the target antenna port in a delay domain; and
the sequentially performing dot multiplication on the plurality of second pilot subsequences and a second target orthogonal coverage code of length Q includes:
performing dot multiplication on the second target orthogonal coverage code and a second pilot subsequence in each row of the pilot resource block.

Optionally, the first determining module is further configured to:

in a case that the second pilot sequence is mapped column-wise to a pilot resource block, obtain a second orthogonal coverage code corresponding to the target antenna port in a Doppler domain, where
the sequentially performing dot multiplication on the plurality of second pilot subsequences and a second target orthogonal coverage code of length Q includes:
performing dot multiplication on the second target orthogonal coverage code and a second pilot subsequence in each column of the pilot resource block.

Optionally, the first determining module is further configured to:

in a case that the second pilot sequence is mapped row-wise to a pilot resource block, obtain a second orthogonal coverage code corresponding to the target antenna port in a Doppler domain, where
the sequentially performing dot multiplication on the plurality of second pilot subsequences and a second target orthogonal coverage code of length Q includes:
performing dot multiplication on the second target orthogonal coverage code and a second pilot subsequence in each row of the pilot resource block.

Optionally, the first determining module is further configured to:

in a case that the second pilot sequence is mapped column-wise to a pilot resource block, obtain a second orthogonal coverage code corresponding to the target antenna port in a delay domain, where
the sequentially performing dot multiplication on the plurality of second pilot subsequences and a second target orthogonal coverage code of length Q includes:
performing dot multiplication on the second target orthogonal coverage code and a second pilot subsequence in each column of the pilot resource block.

Optionally, the first determining module is further configured to:
perform two-dimensional orthogonal processing on the pilot base sequences of the plurality of antenna ports based on the orthogonal coverage code.

Optionally, the first determining module is further configured to:

modulate the pilot base sequence based on a length a of a pilot resource block to which the antenna port is mapped in a delay domain and a length b of the pilot resource block in a Doppler domain, to generate a third pilot sequence of length R, where $R=2^k$, $a=2^\alpha$, $b=2^\beta$, and $\alpha+\beta=k$;
map the third pilot sequence row-wise or column-wise to the pilot resource block; and
obtain, based on the length a of the pilot resource block in a delay domain and the length b of the pilot resource block in a Doppler domain, an orthogonal coverage code of length c in a delay domain and an orthogonal coverage code of length d in a Doppler domain, where a=e×c, b=f×d, e≥1, and f> 1; and

perform dot multiplication row-wise on the orthogonal coverage code of length c and the third pilot sequence in the pilot resource block, and perform dot multiplication column-wise on the orthogonal coverage code of length d and the third pilot sequence in the pilot resource block.

Optionally, the apparatus further includes:
an obtaining module, configured to obtain the orthogonal coverage code based on an orthogonal coverage code preconfiguration table.

Optionally, the orthogonal coverage code includes:
a Walsh-Hadamard code.

Optionally, the apparatus further includes:
a generation module, configured to generate the pilot base sequence based on a protocol stipulation.

Optionally, the pilot base sequence includes:
a PN sequence or a ZC sequence.

Optionally, in a case that the pilot base sequence includes a PN sequence, the pilot base sequence is associated with a pilot resource block ID or a pilot signal block group ID or a pilot ID of a corresponding pilot resource block by using first association information, where

the pilot ID is in a one-to-one correspondence with an antenna port number, and the pilot ID is in a one-to-one correspondence with a receive end UE ID; and
the first association information includes any one or a combination of the following:

an initial value of a linear feedback shift register;
a cyclic shift value of a generated sequence; and
an intercept location of a pilot in a shift register output sequence.

Optionally, in a case that the pilot base sequence includes a ZC sequence, the pilot base sequence is associated with a pilot resource block ID or a pilot signal block group ID or a pilot ID of a corresponding pilot resource block by using second association information, where

the pilot ID is in a one-to-one correspondence with an antenna port number, and the pilot ID is in a one-to-one correspondence with a receive end UE ID; and
the second association information includes any one or a combination of the following:

a ZC sequence root value; and
a cyclic shift value.

Optionally, in a case that pilot base sequences used by antenna ports mapped to a same pilot resource block are the same, and pilot base sequences used by antenna ports mapped to different pilot resource blocks are different, an orthogonal coverage code corresponding to the pilot base sequence is associated with the antenna port number.

Optionally, in a case that pilot base sequences used by antenna ports mapped to a same pilot resource block are different, an orthogonal coverage code corresponding to the pilot base sequence is associated with the pilot resource block ID, the pilot signal block group ID, or the antenna port number.

The pilot transmission apparatus in this embodiment of this application may be an apparatus, or may be a component, an integrated circuit, or a chip in a terminal. The apparatus may be a mobile terminal, or a non-mobile terminal. For example, the mobile device may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The pilot transmission apparatus in this embodiment of this application may be an apparatus with an operating system. The operating system may be an Android (Android) operating system, an iOS operating system, or another possible operating system. This is not specifically limited in the embodiments of this application.

The pilot transmission apparatus provided in this embodiment of this application can implement the processes implemented in the method embodiments in FIG. 1 to FIG. 18, and achieve a same technical effect. To avoid repetition, details are not described herein again.

Optionally, FIG. 20 is a schematic structural diagram of a communications device according to an embodiment of this application. As shown in FIG. 20, the communications device 2000 includes a processor 2001, a memory 2002, a program or an instruction that is stored in the memory 2002 and may run on the processor 2001. For example, when the communications device 2000 is a terminal, the program or the instruction is executed by the processor 2001 to implement the processes of the foregoing synchronization signal block transmission method embodiment, and a same technical effect can be achieved. When the communications device 2000 is a network side device, the program or the instruction is executed by the processor 2001 to implement the processes of the foregoing synchronous signal block transmission method embodiment, and a same technical effect can be achieved. To avoid repetition, details are not described herein again.

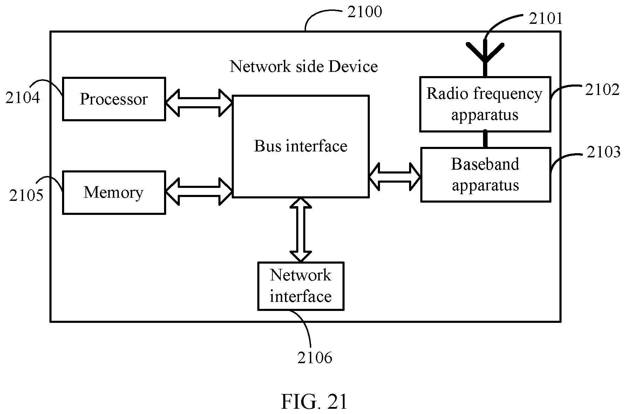

FIG. 21 is a schematic structural diagram of hardware of a network side device according to an embodiment of this application.

As shown in FIG. 21, a network side device 2100 includes an antenna 2101, a radio frequency apparatus 2102, and a baseband apparatus 2103. The antenna 2101 is connected to the radio frequency apparatus 2102. In an uplink direction, the radio frequency apparatus 2102 receives information by using the antenna 2101, and sends the received information to the baseband apparatus 2103 for processing. In a downlink direction, the baseband apparatus 2103 processes information that needs to be sent, and sends processed information to the radio frequency apparatus 2102. The radio frequency apparatus 2102 processes the received information, and sends processed information by using the antenna 2101.

The frequency band processing apparatus may be located in the baseband apparatus 2103. The method performed by the network side device in the foregoing embodiment may be implemented in the baseband apparatus 2103. The baseband apparatus 2103 includes a processor 2104 and a memory 2105.

The baseband apparatus 2103 may include, for example, at least one baseband board, where a plurality of chips are disposed on the baseband board. As shown in FIG. 21, one chip is, for example, the processor 2104, which is connected to the memory 2105, so as to invoke a program in the memory 2105 to perform operations of the network device shown in the foregoing method embodiment.

The baseband apparatus 2103 may further include a network interface 2106, configured to exchange information with the radio frequency apparatus 2102. For example, the interface is a common public radio interface (common public radio interface, CPRI).

Specifically, the network side device in this embodiment of this application further includes an instruction or a program that is stored in the memory 2105 and that can be run on the processor 2104. The processor 2104 invokes the instruction or the program in the memory 2105 to perform the method performed by the modules shown in FIG. 19, and a same technical effect is achieved. To avoid repetition, details are not described herein again.

The processor 2104 is configured to: perform orthogonal processing on a pilot base sequence, and determine pilots corresponding to a plurality of antenna ports; and

mapping the pilots corresponding to the plurality of antenna ports to a pilot resource block, where a pilot corresponding to one antenna port is mapped to one pilot resource block.

Optionally, the processor 2104 is configured to:
perform orthogonal processing on pilot base sequences of the plurality of antenna ports based on an orthogonal coverage code.

Optionally, pilot base sequences used by antenna ports mapped to a same pilot resource block are the same, and pilot base sequences used by antenna ports mapped to different pilot resource blocks are different; and the performing orthogonal processing on pilot base sequences of the plurality of antenna ports based on orthogonal coverage codes includes:
performing, based on different orthogonal coverage codes, orthogonal processing on the pilot base sequences used by the antenna ports mapped to the same pilot resource block.

Optionally, pilot base sequences used by antenna ports mapped to a same pilot resource block are different; and the processor 2104 is configured to:
perform, based on different orthogonal coverage codes, orthogonal processing on the pilot base sequences used by the antenna ports mapped to the same pilot resource block.

Optionally, pilot base sequences used by antenna ports mapped to a same pilot resource block are different; and the processor 2104 is configured to:
perform, based on a same orthogonal coverage code, orthogonal processing on the pilot base sequences used by the antenna ports mapped to the same pilot resource block.

Optionally, pilot base sequences used by antenna ports mapped to a same pilot resource block are different; and the processor 2104 is configured to:
not perform orthogonal processing on the pilot base sequences used by the antenna ports mapped to the same pilot resource block.

Optionally, the processor 2104 is configured to:

perform one-dimensional orthogonal processing on the pilot base sequences of the plurality of antenna ports based on the orthogonal coverage code.

Optionally, the processor 2104 is configured to:

for a target antenna port in the plurality of antenna ports, obtain a first orthogonal coverage code corresponding to the target antenna port;

modulate a pilot base sequence of the target antenna port based on a length L of the first orthogonal coverage code, to generate a first pilot sequence of length M; and

perform dot multiplication on the first pilot sequence and a first target orthogonal coverage code of length M, where the first target orthogonal coverage code includes n first orthogonal coverage codes, where

$$M=n \times L \text{ and } n \geq 1.$$

Optionally, the processor 2104 is configured to:

for a target antenna port in the plurality of antenna ports, obtain a second orthogonal coverage code corresponding to the target antenna port;

modulate a pilot base sequence of the target antenna port based on a length P of the second orthogonal coverage code, to generate a second pilot sequence corresponding to the target antenna port, where the second pilot sequence includes one or more second pilot subsequences of length Q; and

sequentially perform dot multiplication on the plurality of second pilot subsequences and a second target orthogonal coverage code of length Q, where the second target orthogonal coverage code includes r second orthogonal coverage codes, where

$$Q=r \times P \text{ and } r \geq 1.$$

Optionally, in a case that RE resources of second pilot subsequences of different second pilot sequences are orthogonal in a delay-Doppler domain, orthogonal coverage codes corresponding to the subsequences of the different second pilot sequences are the same or different; or

in a case that RE resources of second pilot subsequences of different second pilot sequences are not orthogonal in a delay-Doppler domain, orthogonal coverage codes corresponding to the second pilot subsequences of the different second pilot sequences are different.

Optionally, the processor 2104 is configured to:

in a case that the second pilot sequence is mapped row-wise to a pilot resource block, obtain a second orthogonal coverage code corresponding to the target antenna port in a delay domain, where

the sequentially performing dot multiplication on the plurality of second pilot subsequences and a second target orthogonal coverage code of length Q includes:

performing dot multiplication on the second target orthogonal coverage code and a second pilot subsequence in each row of the pilot resource block.

Optionally, the processor 2104 is configured to:

in a case that the second pilot sequence is mapped column-wise to a pilot resource block, obtain a second orthogonal coverage code corresponding to the target antenna port in a Doppler domain, where

the sequentially performing dot multiplication on the plurality of second pilot subsequences and a second target orthogonal coverage code of length Q includes:

performing dot multiplication on the second target orthogonal coverage code and a second pilot subsequence in each column of the pilot resource block.

Optionally, the processor 2104 is configured to:

in a case that the second pilot sequence is mapped row-wise to a pilot resource block, obtain a second orthogonal coverage code corresponding to the target antenna port in a Doppler domain, where

the sequentially performing dot multiplication on the plurality of second pilot subsequences and a second target orthogonal coverage code of length Q includes:

performing dot multiplication on the second target orthogonal coverage code and a second pilot subsequence in each row of the pilot resource block.

Optionally, the processor 2104 is configured to:

in a case that the second pilot sequence is mapped column-wise to a pilot resource block, obtain a second orthogonal coverage code corresponding to the target antenna port in a delay domain, where
the sequentially performing dot multiplication on the plurality of second pilot subsequences and a second target orthogonal coverage code of length Q includes:
performing dot multiplication on the second target orthogonal coverage code and a second pilot subsequence in each column of the pilot resource block.

Optionally, the processor 2104 is configured to:
perform two-dimensional orthogonal processing on the pilot base sequences of the plurality of antenna ports based on the orthogonal coverage code.
Optionally, the processor 2104 is configured to:

modulate the pilot base sequence based on a length a and a length b in a Doppler domain, to generate a third pilot sequence of length R, where $R=2^k$, $a=2^\alpha$, $b=2^\beta$, and $\alpha+\beta=k$;
map the third pilot sequence row-wise or column-wise to the pilot resource block; and
obtain, based on the length a of the pilot resource block in a delay domain and the length b of the pilot resource block in a Doppler domain, an orthogonal coverage code of length c in a delay domain and an orthogonal coverage code of length d in a Doppler domain, where $a=e\times c$, $b=f\times d$, $e\geq1$, and $f>1$; and
perform dot multiplication row-wise on the orthogonal coverage code of length c and the third pilot sequence in the pilot resource block, and perform dot multiplication column-wise on the orthogonal coverage code of length d and the third pilot sequence in the pilot resource block.

Optionally, the processor 2104 is configured to:
obtain the orthogonal coverage code based on an orthogonal coverage code preconfiguration table.
Optionally, the orthogonal coverage code includes:
a Walsh-Hadamard code.
Optionally, the processor 2104 is configured to:
generate the pilot base sequence based on a protocol stipulation.
Optionally, the pilot base sequence includes:
a PN sequence or a ZC sequence.
Optionally, in a case that the pilot base sequence includes a PN sequence, the pilot base sequence is associated with a pilot resource block ID or a pilot signal block group ID or a pilot ID of a corresponding pilot resource block by using first association information, where

the pilot ID is in a one-to-one correspondence with an antenna port number, and the pilot ID is in a one-to-one correspondence with a receive end UE ID; and
the first association information includes any one or a combination of the following:

an initial value of a linear feedback shift register;
a cyclic shift value of a generated sequence; and
an intercept location of a pilot in a shift register output sequence.

Optionally, in a case that the pilot base sequence includes a ZC sequence, the pilot base sequence is associated with a pilot resource block ID or a pilot signal block group ID or a pilot ID of a corresponding pilot resource block by using second association information, where

the pilot ID is in a one-to-one correspondence with an antenna port number, and the pilot ID is in a one-to-one correspondence with a receive end UE ID; and
the second association information includes any one or a combination of the following:

a ZC sequence root value; and
a cyclic shift value.

Optionally, in a case that pilot base sequences used by antenna ports mapped to a same pilot resource block are the same, and pilot base sequences used by antenna ports mapped to different pilot resource blocks are different, an orthogonal coverage code corresponding to the pilot base sequence is associated with the antenna port number.

Optionally, in a case that pilot base sequences used by antenna ports mapped to a same pilot resource block are different, an orthogonal coverage code corresponding to the pilot base sequence is associated with the pilot resource block ID, the pilot signal block group ID, or the antenna port number.

An embodiment of this application further provides a readable storage medium. The readable storage medium stores a program or an instruction, and when the program or the instruction is executed by a processor, the processes of the foregoing pilot transmission method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction of a network side device to implement the processes of the foregoing pilot transmission method embodiment and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A pilot transmission method, wherein the method comprises:

   performing, by a network side device, orthogonal processing on a pilot base sequence, and determining pilots corresponding to a plurality of antenna ports; and
   mapping, by the network side device, the pilots corresponding to the plurality of antenna ports to a pilot resource block, wherein
   a pilot corresponding to one antenna port is mapped to one pilot resource block.

2. The pilot transmission method according to claim 1, wherein the performing, by a network side device, orthogonal processing on a pilot base sequence comprises:
   performing, by the network side device, orthogonal processing on pilot base sequences of the plurality of antenna ports based on an orthogonal coverage code.

3. The pilot transmission method according to claim 2, wherein pilot base sequences used by antenna ports mapped to a same pilot resource block are the same, and pilot base sequences used by antenna ports mapped to different pilot resource blocks are different; and
the performing, by the network side device, orthogonal processing on pilot base sequences of the plurality of antenna ports based on an orthogonal coverage code comprises:
performing, by the network side device based on different orthogonal coverage codes, orthogonal processing on the pilot base sequences used by the antenna ports mapped to the same pilot resource block.

4. The pilot transmission method according to claim 2, wherein pilot base sequences used by antenna ports mapped to a same pilot resource block are different; and
the performing, by the network side device, orthogonal processing on pilot base sequences of the plurality of antenna ports based on an orthogonal coverage code comprises:
performing, by the network side device based on different orthogonal coverage codes, orthogonal processing on the pilot base sequences used by the antenna ports mapped to the same pilot resource block.

5. The pilot transmission method according to claim 2, wherein pilot base sequences used by antenna ports mapped to a same pilot resource block are different; and
the performing, by the network side device, orthogonal processing on pilot base sequences of the plurality of antenna ports based on an orthogonal coverage code comprises:
performing, by the network side device based on a same orthogonal coverage code, orthogonal processing on the pilot base sequences used by the antenna ports mapped to the same pilot resource block.

6. The pilot transmission method according to claim 2, wherein pilot base sequences used by antenna ports mapped to a same pilot resource block are different; and
the method further comprises:
not performing, by the network side device, orthogonal processing on the pilot base sequences used by the antenna ports mapped to the same pilot resource block.

7. The pilot transmission method according to any one of claims 2 to 5, wherein the performing, by the network side device, orthogonal processing on pilot base sequences of the plurality of antenna ports based on an orthogonal coverage code comprises:
performing, by the network side device, one-dimensional orthogonal processing on the pilot base sequences of the plurality of antenna ports based on the orthogonal coverage code.

8. The pilot transmission method according to claim 7, wherein the performing, by the network side device, one-dimensional orthogonal processing on the pilot base sequences of the plurality of antenna ports comprises:

for a target antenna port in the plurality of antenna ports, obtaining, by the network side device, a first orthogonal coverage code corresponding to the target antenna port;
modulating, by the network side device, a pilot base sequence of the target antenna port based on a length L of the first orthogonal coverage code, to generate a first pilot sequence of length M; and
performing, by the network side device, dot multiplication on the first pilot sequence and a first target orthogonal coverage code of length M, wherein the first target orthogonal coverage code comprises n first orthogonal coverage codes, wherein

$$M = n \times L \text{ and } n \geq 1.$$

9. The pilot transmission method according to claim 7, wherein the performing, by the network side device, one-dimensional orthogonal processing on the pilot base sequences comprises:

for a target antenna port in the plurality of antenna ports, obtaining, by the network side device, a second orthogonal coverage code corresponding to the target antenna port;
modulating, by the network side device, a pilot base sequence of the target antenna port based on a length P of the second orthogonal coverage code, to generate a second pilot sequence corresponding to the target antenna port, wherein the second pilot sequence comprises one or more second pilot subsequences of length Q; and

sequentially performing, by the network side device, dot multiplication on the plurality of second pilot subsequences and a second target orthogonal coverage code of length Q, wherein the second target orthogonal coverage code comprises r second orthogonal coverage codes, wherein

$$Q=r \times P \text{ and } r \geq 1.$$

10. The pilot transmission method according to claim 9, wherein in a case that RE resources of second pilot subsequences of different second pilot sequences are orthogonal in a delay-Doppler domain, orthogonal coverage codes corresponding to the second pilot subsequences of the different second pilot sequences are the same or different; or
in a case that RE resources of second pilot subsequences of different second pilot sequences are not orthogonal in a delay-Doppler domain, orthogonal coverage codes corresponding to the second pilot subsequences of the different second pilot sequences are different.

11. The pilot transmission method according to claim 9, wherein the obtaining, by the network side device, a second orthogonal coverage code corresponding to the target antenna port comprises:

in a case that the second pilot sequence is mapped row-wise to a pilot resource block, obtaining, by the network side device, a second orthogonal coverage code corresponding to the target antenna port in a delay domain, wherein
the sequentially performing, by the network side device, dot multiplication on the plurality of second pilot subsequences and a second target orthogonal coverage code of length Q comprises:
performing dot multiplication on the second target orthogonal coverage code and a second pilot subsequence in each row of the pilot resource block.

12. The pilot transmission method according to claim 10, wherein the obtaining, by the network side device, a second orthogonal coverage code corresponding to the target antenna port comprises:

in a case that the second pilot sequence is mapped column-wise to a pilot resource block, obtaining, by the network side device, a second orthogonal coverage code corresponding to the target antenna port in a Doppler domain, wherein
the sequentially performing, by the network side device, dot multiplication on the plurality of second pilot subsequences and a second target orthogonal coverage code of length Q comprises:
performing dot multiplication on the second target orthogonal coverage code and a second pilot subsequence in each column of the pilot resource block.

13. The pilot transmission method according to claim 9, wherein the obtaining, by the network side device, a second orthogonal coverage code corresponding to the target antenna port comprises:

in a case that the second pilot sequence is mapped row-wise to a pilot resource block, obtaining, by the network side device, a second orthogonal coverage code corresponding to the target antenna port in a Doppler domain, wherein
the sequentially performing, by the network side device, dot multiplication on the plurality of second pilot subsequences and a second target orthogonal coverage code of length Q comprises:
performing dot multiplication on the second target orthogonal coverage code and a second pilot subsequence in each row of the pilot resource block.

14. The pilot transmission method according to claim 13, wherein the obtaining, by the network side device, a second orthogonal coverage code corresponding to the target antenna port comprises:

in a case that the second pilot sequence is mapped column-wise to a pilot resource block, obtaining, by the network side device, a second orthogonal coverage code corresponding to the target antenna port in a delay domain, wherein
the sequentially performing, by the network side device, dot multiplication on the plurality of second pilot subsequences and a second target orthogonal coverage code of length Q comprises:
performing dot multiplication on the second target orthogonal coverage code and a second pilot subsequence in each column of the pilot resource block.

**15.** The pilot transmission method according to any one of claims 2 to 5, wherein the performing, by the network side device, orthogonal processing on pilot base sequences of the plurality of antenna ports based on an orthogonal coverage code comprises:
performing, by the network side device, two-dimensional orthogonal processing on the pilot base sequences of the plurality of antenna ports based on the orthogonal coverage code.

**16.** The pilot transmission method according to claim 15, wherein the performing, by the network side device, two-dimensional orthogonal processing on the pilot base sequences of the plurality of antenna ports comprises:

modulating, by the network side device, the pilot base sequence based on a length a of a pilot resource block to which the antenna port is mapped in a delay domain and a length b of the pilot resource block in a Doppler domain, to generate a third pilot sequence of length R, wherein $R=2^k$, $a=2^\alpha$, $b=2^\beta$, and $\alpha+\beta=k$;
mapping, by the network side device, the third pilot sequence row-wise or column-wise to the pilot resource block;
obtaining, by the network side device based on the length a of the pilot resource block in a delay domain and the length b of the pilot resource block in a Doppler domain, an orthogonal coverage code of length c in a delay domain and an orthogonal coverage code of length d in a Doppler domain, wherein $a=e\times c$, $b=f\times d$, $e\geq1$, and $f>1$; and
performing, by the network side device, dot multiplication row-wise on the orthogonal coverage code of length c and the third pilot sequence in the pilot resource block, and performing dot multiplication column-wise on the orthogonal coverage code of length d and the third pilot sequence in the pilot resource block.

**17.** The pilot transmission method according to claim 7 or 15, wherein the method further comprises:
obtaining, by the network side device, the orthogonal coverage code based on an orthogonal coverage code preconfiguration table.

**18.** The pilot transmission method according to any one of claims 2 to 5, wherein the orthogonal coverage code comprises:
a Walsh-Hadamard code.

**19.** The pilot transmission method according to claim 3 or 4, wherein the method further comprises:
generating, by the network side device, the pilot base sequence based on a protocol stipulation.

**20.** The pilot transmission method according to claim 18, wherein the pilot base sequence comprises:
a PN sequence or a ZC sequence.

**21.** The pilot transmission method according to claim 20, wherein in a case that the pilot base sequence comprises a PN sequence, the pilot base sequence is associated with a pilot resource block ID or a pilot signal block group ID or a pilot ID of a corresponding pilot resource block by using first association information, wherein

the pilot ID is in a one-to-one correspondence with an antenna port number, and the pilot ID is in a one-to-one correspondence with a receive end UE ID; and
the first association information comprises any one or a combination of the following:

an initial value of a linear feedback shift register;
a cyclic shift value of a generated sequence; and
an intercept location of a pilot in a shift register output sequence.

**22.** The pilot transmission method according to claim 20, wherein in a case that the pilot base sequence comprises a ZC sequence, the pilot base sequence is associated with a pilot resource block ID or a pilot signal block group ID or a pilot ID of a corresponding pilot resource block by using second association information, wherein

the pilot ID is in a one-to-one correspondence with an antenna port number, and the pilot ID is in a one-to-one correspondence with a receive end UE ID; and
the second association information comprises any one or a combination of the following:

a ZC sequence root value; and
a cyclic shift value.

**23.** The pilot transmission method according to claim 21 or 22, wherein in a case that pilot base sequences used by antenna ports mapped to a same pilot resource block are the same, and pilot base sequences used by antenna ports mapped to different pilot resource blocks are different, an orthogonal coverage code corresponding to the pilot base sequence is associated with the antenna port number.

24. The pilot transmission method according to claim 21 or 22, wherein in a case that pilot base sequences used by antenna ports mapped to a same pilot resource block are different, an orthogonal coverage code corresponding to the pilot base sequence is associated with the pilot resource block ID, the pilot signal block group ID, or the antenna port number.

25. A pilot transmission apparatus, wherein the apparatus comprises:

   a first determining module, configured to: perform orthogonal processing on a pilot base sequence, and determine pilots corresponding to a plurality of antenna ports; and
   a first mapping module, configured to map the pilots corresponding to the plurality of antenna ports to a pilot resource block, wherein
   a pilot corresponding to one antenna port is mapped to one pilot resource block.

26. The pilot transmission apparatus according to claim 25, wherein the first determining module is further configured to:
   perform orthogonal processing on pilot base sequences of the plurality of antenna ports based on an orthogonal coverage code.

27. The pilot transmission apparatus according to claim 26, wherein pilot base sequences used by antenna ports mapped to a same pilot resource block are the same, and pilot base sequences used by antenna ports mapped to different pilot resource blocks are different; and
   the first determining module is further configured to:
   perform, based on different orthogonal coverage codes, orthogonal processing on the pilot base sequences used by the antenna ports mapped to the same pilot resource block.

28. The pilot transmission apparatus according to claim 26, wherein pilot base sequences used by antenna ports mapped to a same pilot resource block are different; and
   the first determining module is further configured to:
   perform, based on different orthogonal coverage codes, orthogonal processing on the pilot base sequences used by the antenna ports mapped to the same pilot resource block.

29. The pilot transmission apparatus according to claim 26, wherein pilot base sequences used by antenna ports mapped to a same pilot resource block are different; and
   the first determining module is further configured to:
   perform, based on a same orthogonal coverage code, orthogonal processing on the pilot base sequences used by the antenna ports mapped to the same pilot resource block.

30. The pilot transmission apparatus according to claim 26, wherein pilot base sequences used by antenna ports mapped to a same pilot resource block are different; and
   the apparatus further comprises:
   a first processing module, configured to not perform orthogonal processing on the pilot base sequences used by the antenna ports mapped to the same pilot resource block.

31. The pilot transmission apparatus according to any one of claims 26 to 29, wherein the first determining module is further configured to:
   perform one-dimensional orthogonal processing on the pilot base sequences of the plurality of antenna ports based on the orthogonal coverage code.

32. The pilot transmission apparatus according to claim 31, wherein the first determining module is further configured to:

   for a target antenna port in the plurality of antenna ports, obtain a first orthogonal coverage code corresponding to the target antenna port;
   modulate a pilot base sequence of the target antenna port based on a length L of the first orthogonal coverage code, to generate a first pilot sequence of length M; and
   perform dot multiplication on the first pilot sequence and a first target orthogonal coverage code of length M, wherein the first target orthogonal coverage code comprises n first orthogonal coverage codes, wherein

$$M=n \times L \text{ and } n \geq 1.$$

33. The pilot transmission apparatus according to claim 31, wherein the first determining module is further configured to:

for a target antenna port in the plurality of antenna ports, obtain a second orthogonal coverage code corresponding to the target antenna port;

modulate a pilot base sequence of the target antenna port based on a length P of the second orthogonal coverage code, to generate a second pilot sequence corresponding to the target antenna port, wherein the second pilot sequence comprises one or more second pilot subsequences of length Q; and

sequentially perform dot multiplication on the plurality of second pilot subsequences and a second target orthogonal coverage code of length Q, wherein the second target orthogonal coverage code comprises r second orthogonal coverage codes, wherein

$$Q=r \times P \text{ and } r \geq 1.$$

34. The pilot transmission apparatus according to claim 33, wherein in a case that RE resources of second pilot subsequences of different second pilot sequences are orthogonal in a delay-Doppler domain, orthogonal coverage codes corresponding to the second pilot subsequences of the different second pilot sequences are the same or different; or

in a case that RE resources of second pilot subsequences of different second pilot sequences are not orthogonal in a delay-Doppler domain, orthogonal coverage codes corresponding to the second pilot subsequences of the different second pilot sequences are different.

35. The pilot transmission apparatus according to claim 33, wherein the first determining module is further configured to:

in a case that the second pilot sequence is mapped row-wise to a pilot resource block, obtain a second orthogonal coverage code corresponding to the target antenna port in a delay domain, wherein

the sequentially performing dot multiplication on the plurality of second pilot subsequences and a second target orthogonal coverage code of length Q comprises:

performing dot multiplication on the second target orthogonal coverage code and a second pilot subsequence in each row of the pilot resource block.

36. The pilot transmission apparatus according to claim 34, wherein the first determining module is further configured to:

in a case that the second pilot sequence is mapped column-wise to a pilot resource block, obtain a second orthogonal coverage code corresponding to the target antenna port in a Doppler domain, wherein

the sequentially performing dot multiplication on the plurality of second pilot subsequences and a second target orthogonal coverage code of length Q comprises:

performing dot multiplication on the second target orthogonal coverage code and a second pilot subsequence in each column of the pilot resource block.

37. The pilot transmission apparatus according to claim 33, wherein the first determining module is further configured to:

in a case that the second pilot sequence is mapped row-wise to a pilot resource block, obtain a second orthogonal coverage code corresponding to the target antenna port in a Doppler domain, wherein

the sequentially performing dot multiplication on the plurality of second pilot subsequences and a second target orthogonal coverage code of length Q comprises:

performing dot multiplication on the second target orthogonal coverage code and a second pilot subsequence in each row of the pilot resource block.

38. The pilot transmission apparatus according to claim 37, wherein the first determining module is further configured to:

in a case that the second pilot sequence is mapped column-wise to a pilot resource block, obtain a second orthogonal coverage code corresponding to the target antenna port in a delay domain, wherein

the sequentially performing dot multiplication on the plurality of second pilot subsequences and a second target orthogonal coverage code of length Q comprises:
performing dot multiplication on the second target orthogonal coverage code and a second pilot subsequence in each column of the pilot resource block.

39. The pilot transmission apparatus according to any one of claims 26 to 29, wherein the first determining module is further configured to:
perform two-dimensional orthogonal processing on the pilot base sequences of the plurality of antenna ports based on the orthogonal coverage code.

40. The pilot transmission apparatus according to claim 39, wherein the first determining module is further configured to:

modulate the pilot base sequence based on a length a of a pilot resource block to which the antenna port is mapped in a delay domain and a length b of the pilot resource block in a Doppler domain, to generate a third pilot sequence of length R, wherein $R=2^k$, $a=2^\alpha$, $b=2^\beta$, and $\alpha+\beta=k$;
map the third pilot sequence row-wise or column-wise to the pilot resource block;
obtain, based on the length a of the pilot resource block in a delay domain and the length b of the pilot resource block in a Doppler domain, an orthogonal coverage code of length c in a delay domain and an orthogonal coverage code of length d in a Doppler domain, wherein $a=e\times c$, $b=f\times d$, $e\geq1$, and $f>1$; and
perform dot multiplication row-wise on the orthogonal coverage code of length c and the third pilot sequence in the pilot resource block, and perform dot multiplication column-wise on the orthogonal coverage code of length d and the third pilot sequence in the pilot resource block.

41. The pilot transmission apparatus according to claim 31 or 39, wherein the apparatus further comprises:
an obtaining module, configured to obtain the orthogonal coverage code based on an orthogonal coverage code preconfiguration table.

42. The pilot transmission apparatus according to claim 27 or 28, wherein the apparatus further comprises:
a generation module, configured to generate the pilot base sequence based on a protocol stipulation.

43. A network side device, comprising a processor, a memory, and a program or an instruction that is stored in the memory and that can be run on the processor, wherein when the program or the instruction is executed by the processor, the steps of the pilot transmission method according to any one of claims 1 to 24 are implemented.

44. A readable storage medium, wherein the readable storage medium stores a program or an instruction, and when the program or the instruction is executed by a processor, the steps of the pilot transmission method according to any one of claims 1 to 24 are implemented.

FIG. 1

FIG. 2

Time domain impulse response

$$g(t,\tau)$$

$F$                    $F$

Time domain          SFF          Delay-Doppler
response       $H(t,f)$  —T—→  $h(v,\tau)$       response
(OFDM)                                           (OTFS)

$F$                    $F$

$$B(v,f)$$

Doppler-variant response (OTFS)

FIG. 3

Time-frequency domain (N OFDM symbols)

$x[k,l]$ → Precoding (ISFFT) → $X[n,m]$ → OFDM modulator → $s(t)$ → Channel H(t, f) → $r(t)$ → OFDM demodulator → $Y[n,m]$ → Decoder (SFFT) → $y[k,l]$

Delay-Doppler domain

FIG. 4

Tx Signal                          Rx Signal

$k_p+2k_v$  $k_p$  $k_p-2k_v$       $k_p+2k_v$  $k_p$  $k_p-2k_v$

$\tau$  M                          $\tau$  M

delay                              delay

$l_p-l_\tau$                       $l_p-l_\tau$

$l_p$                              $l_p$

$l_p+l_\tau$                       $l_p+l_\tau$

N                                  N

Doppler         $v$                Doppler         $v$

■ Single point pilot
☐ Guard symbol
▩ Data part
▧ Offset peak
▨ Offset peak

FIG. 5

FIG. 6

FIG. 7

FIG. 8

FIG. 9

FIG. 10

| QCL Type | Type information |
|----------|------------------|
| QCL TypeA | Doppler shift, Doppler spread, average delay, and delay spread |
| QCL TypeB | Doppler shift and Doppler spread |
| QCL TypeC | average delay and Doppler shift |
| QCL TypeD | spatial Rx parameter |

FIG. 11

Perform orthogonal processing on a pilot base sequence, and determine pilots corresponding to a plurality of antenna ports — 1200

Map the pilots corresponding to the plurality of antenna ports to a pilot resource block — 1210

FIG. 12

Pilot signal block

Pilot resource
block

*Guard interval*

FIG. 13

Pilot base sequence

| $b_0$ | $b_1$ | $b_2$ | $b_3$ |
|---|---|---|---|

$\times$

| $w_0$ | $w_1$ | $w_2$ | $w_3$ |
|---|---|---|---|

Orthogonal coverage code

$\rightarrow$

| $S_0$ | $S_1$ | $S_2$ | $S_3$ |
|---|---|---|---|

Pilot

Pilot base sequence

| $w_0$ |
|---|
| $w_1$ |

$\times$

| $b_0$ | $b_1$ | $b_2$ | $b_3$ |
|---|---|---|---|
| $b_4$ | $b_5$ | $b_6$ | $b_7$ |

$\times$

| $w_0$ | $w_1$ | $w_2$ | $w_3$ |
|---|---|---|---|

Orthogonal coverage code

$\rightarrow$

Pilot block

| $S_0$ | $S_1$ | $S_2$ | $S_3$ |
|---|---|---|---|
| $S_4$ | $S_5$ | $S_6$ | $S_7$ |

FIG. 14

| $b_0$ | $b_1$ | $b_2$ | $b_3$ | $b_4$ | $b_5$ | $b_6$ | $b_7$ | $b_8$ | $b_9$ | $b_{10}$ | $b_{11}$ | $b_{12}$ | $b_{13}$ | $b_{14}$ | $b_{15}$ |

| $w_0$ | $w_1$ | $w_2$ | $w_3$ |

Walsh-Hadamard code of length 4

| $b_0$ | $b_1$ | $b_2$ | $b_3$ |
| $b_4$ | $b_5$ | $b_6$ | $b_7$ |
| $b_8$ | $b_9$ | $b_{10}$ | $b_{11}$ |
| $b_{12}$ | $b_{13}$ | $b_{14}$ | $b_{15}$ |

Row-wise mapping

| $w_0$ | | $b_0$ | $b_4$ | $b_8$ | $b_{12}$ |
| $w_1$ | | $b_1$ | $b_5$ | $b_9$ | $b_{13}$ |
| $w_2$ | | $b_2$ | $b_6$ | $b_{10}$ | $b_{14}$ |
| $w_3$ | | $b_3$ | $b_7$ | $b_{11}$ | $b_{15}$ |

Column-wise mapping

FIG. 15

| $b_0$ | $b_1$ | $b_2$ | $b_3$ | $b_4$ | $b_5$ | $b_6$ | $b_7$ | $b_8$ | $b_9$ | $b_{10}$ | $b_{11}$ | $b_{12}$ | $b_{13}$ | $b_{14}$ | $b_{15}$ |

| $w_0$ | $w_1$ | $w_2$ | $w_3$ |

Walsh-Hadamard code of length 4

| $w_0$ | | $b_0$ | $b_1$ | $b_2$ | $b_3$ |
| $w_1$ | | $b_4$ | $b_5$ | $b_6$ | $b_7$ |
| $w_2$ | | $b_8$ | $b_9$ | $b_{10}$ | $b_{11}$ |
| $w_3$ | | $b_{12}$ | $b_{13}$ | $b_{14}$ | $b_{15}$ |

Row-wise mapping

| $w_0$ | | $b_0$ | $b_4$ | $b_8$ | $b_{12}$ |
| $w_1$ | | $b_1$ | $b_5$ | $b_9$ | $b_{13}$ |
| $w_2$ | | $b_2$ | $b_6$ | $b_{10}$ | $b_{14}$ |
| $w_3$ | | $b_3$ | $b_7$ | $b_{11}$ | $b_{15}$ |

| $w_0$ | $w_1$ | $w_2$ | $w_3$ |

Column-wise mapping

FIG. 16

$$\mathbf{H}_1 = 0, \qquad \mathbf{H}_2 = \begin{matrix} 0 & 0 \\ 0 & 1 \end{matrix}, \qquad \mathbf{H}_4 = \begin{matrix} 0 & 0 & 0 & 0 \\ 0 & 1 & 0 & 1 \\ 0 & 0 & 1 & 1 \\ 0 & 1 & 1 & 0 \end{matrix}, \qquad \mathbf{H}_{2N} = \begin{matrix} \mathbf{H}_N & \mathbf{H}_N \\ \mathbf{H}_N & \overline{\mathbf{H}_N} \end{matrix};$$

FIG. 17

Pilot generation

Pilot mapping

Tx
samples

Initial value — Signal generator → Orthogonal coverage code modulation →

Add guard REs and multiplex → ISSFT to TF domain → Convert to time domain samples →

Information bit — Channel coding → Modulation →

Data generation

FIG. 18

1910 1920

First determining module — First mapping module

FIG. 19

2000

Communications device

2001 Processor ⟺ Memory 2002

FIG. 20

FIG. 21

## INTERNATIONAL SEARCH REPORT

| International application No. |
| --- |
| **PCT/CN2021/136067** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, 3GPP: 正交时频空, 多天线, 导频, 参考信号, 正交覆盖码, 点乘, 映射, 延迟多普勒, 资源块, 基序列, 伪噪声, 沃尔什, 一维, 二维, 行, 列, 长度, 循环移位, OTFS, multi-antenna, MIMO, pilot, RS, cover code, OCC, multiplication, multiply, map, delay doppler, resource block, RB, base sequence, PN, ZC, walsh, dimension, row, column, CS

**C. DOCUMENTS CONSIDERED TO BE RELEVANT**

| Category* | Citation of document, with indication, where appropriate, of the relevant passages | Relevant to claim No. |
| --- | --- | --- |
| X | CN 104780013 A (FUJITSU LIMITED) 15 July 2015 (2015-07-15) see description paragraphs [0004], [0110]-[0115] | 1-8, 17-20, 25-32, 41-44 |
| A | CN 104780013 A (FUJITSU LIMITED) 15 July 2015 (2015-07-15) see description paragraphs [0004], [0110]-[0115] | 9-16, 21-24, 33-40 |
| X | CN 102281115 A (QUALCOMM INC.) 14 December 2011 (2011-12-14) see description, paragraphs [0044]-[0092] | 1-8, 17-20, 25-32, 41-44 |
| A | CN 102281115 A (QUALCOMM INC.) 14 December 2011 (2011-12-14) see description, paragraphs [0044]-[0092] | 9-16, 21-24, 33-40 |
| X | CN 101375570 A (QUALCOMM INC.) 25 February 2009 (2009-02-25) see description, paragraphs [0042]-[0074] | 1-8, 17-20, 25-32, 41-44 |
| A | CN 101375570 A (QUALCOMM INC.) 25 February 2009 (2009-02-25) see description, paragraphs [0042]-[0074] | 9-16, 21-24, 33-40 |
| X | US 2006023666 A1 (QUALCOMM INC.) 02 February 2006 (2006-02-02) see claims 21-29 | 1-8, 17-20, 25-32, 41-44 |

☑ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **18 February 2022** | **24 February 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/136067**

**C.     DOCUMENTS CONSIDERED TO BE RELEVANT**

| Category* | Citation of document, with indication, where appropriate, of the relevant passages | Relevant to claim No. |
|---|---|---|
| A | US 2006023666 A1 (QUALCOMM INC.) 02 February 2006 (2006-02-02)<br>see claims 21-29 | 9-16, 21-24, 33-40 |

**INTERNATIONAL SEARCH REPORT**
Information on patent family members

International application No.

**PCT/CN2021/136067**

| Patent document cited in search report | | | Publication date (day/month/year) | Patent family member(s) | | | Publication date (day/month/year) |
|---|---|---|---|---|---|---|---|
| CN | 104780013 | A | 15 July 2015 | CN | 104796377 | A | 22 July 2015 |
| CN | 102281115 | A | 14 December 2011 | CN | 102281115 | B | 30 September 2015 |
| | | | | US | 2007195906 | A1 | 23 August 2007 |
| | | | | US | 8130857 | B2 | 06 March 2012 |
| | | | | JP | 2009524362 | A | 25 June 2009 |
| | | | | KR | 20110005748 | A | 18 January 2011 |
| | | | | KR | 101077386 | B1 | 26 October 2011 |
| | | | | CA | 2636201 | A1 | 26 July 2007 |
| | | | | CA | 2636201 | C | 15 November 2011 |
| | | | | EP | 2053816 | A1 | 29 April 2009 |
| | | | | EP | 2053816 | B1 | 27 December 2017 |
| | | | | EP | 1989850 | A2 | 12 November 2008 |
| | | | | KR | 20080086934 | A | 26 September 2008 |
| | | | | KR | 101025073 | B1 | 25 March 2011 |
| | | | | JP | 2014161071 | A | 04 September 2014 |
| | | | | JP | 6026459 | B2 | 16 November 2016 |
| | | | | BR | PI0706579 | A2 | 29 March 2011 |
| | | | | BR | PI0706579 | B1 | 29 September 2020 |
| | | | | CN | 102394681 | A | 28 March 2012 |
| | | | | CN | 102394681 | B | 28 January 2015 |
| | | | | US | 2016020865 | A1 | 21 January 2016 |
| | | | | PL | 2026518 | T3 | 29 April 2016 |
| | | | | US | 2010142490 | A1 | 10 June 2010 |
| | | | | US | 9225452 | B2 | 29 December 2015 |
| | | | | EP | 2026518 | A2 | 18 February 2009 |
| | | | | EP | 2026518 | A3 | 29 April 2009 |
| | | | | EP | 2026518 | B1 | 18 November 2015 |
| | | | | RU | 2008134111 | A | 27 February 2010 |
| | | | | RU | 2404529 | C2 | 20 November 2010 |
| | | | | WO | 2007084988 | A2 | 26 July 2007 |
| | | | | WO | 2007084988 | A3 | 11 October 2007 |
| CN | 101375570 | A | 25 February 2009 | HU | E026553 | T2 | 28 June 2016 |
| | | | | TW | 200746734 | A | 16 December 2007 |
| | | | | TW | I415430 | B | 11 November 2013 |
| | | | | CN | 101375570 | B | 25 June 2014 |
| | | | | TW | 201301800 | A | 01 January 2013 |
| | | | | TW | I488454 | B | 11 June 2015 |
| | | | | DK | 2026518 | T3 | 11 January 2016 |
| | | | | ES | 2559418 | T3 | 12 February 2016 |
| | | | | PT | 2026518 | E | 23 February 2016 |
| US | 2006023666 | A1 | 02 February 2006 | US | 6952454 | B1 | 04 October 2005 |
| | | | | US | 2006093067 | A1 | 04 May 2006 |
| | | | | US | 7813441 | B2 | 12 October 2010 |
| | | | | US | 2010142638 | A1 | 10 June 2010 |
| | | | | US | 8194776 | B2 | 05 June 2012 |
| | | | | US | 7751492 | B2 | 06 July 2010 |
| | | | | US | RE47228 | E | 05 February 2019 |
| | | | | US | 2006088007 | A1 | 27 April 2006 |
| | | | | US | 7664193 | B2 | 16 February 2010 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011460557